(19) Europäisches Patentamt
European Patent Office
Office européen des brevets

(11) EP 3 331 646 B1

(12) FASCICULE DE BREVET EUROPEEN

(45) Date de publication et mention de la délivrance du brevet:
**19.05.2021 Bulletin 2021/20**

(21) Numéro de dépôt: **16751252.4**

(22) Date de dépôt: **04.08.2016**

(51) Int Cl.:
***B01J 20/26*** (2006.01) ***B01J 20/28*** (2006.01)
***C02F 1/28*** (2006.01) ***B01J 39/04*** (2017.01)
***B01J 39/20*** (2006.01) ***C02F 1/44*** (2006.01)
***C02F 1/62*** (2006.01) ***C02F 101/00*** (2006.01)
***C02F 101/10*** (2006.01) ***C02F 101/20*** (2006.01)
***C02F 103/16*** (2006.01) ***C02F 103/34*** (2006.01)

(86) Numéro de dépôt international:
**PCT/EP2016/068626**

(87) Numéro de publication internationale:
**WO 2017/021484 (09.02.2017 Gazette 2017/06)**

(54) **NANOFIBRES GONFLABLES ET INSOLUBLES ET LEUR UTILISATION DANS LE TRAITEMENT DES EFFLUENTS ESSENTIELLEMENT AQUEUX**

QUELLBARE UND UNLÖSLICHE NANOFASERN UND VERWENDUNG DAVON IN DER BEHANDLUNG VON IM WESENTLICHEN WÄSSRIGEN ABWÄSSERN

SWELLABLE AND INSOLUBLE NANOFIBRES AND USE THEREOF IN THE TREATMENT OF ESSENTIALLY AQUEOUS EFFLUENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.08.2015 FR 1557570**
**07.10.2015 FR 1559537**

(43) Date de publication de la demande:
**13.06.2018 Bulletin 2018/24**

(73) Titulaires:
- **Commissariat à l'énergie atomique et aux énergies alternatives**
**75015 Paris (FR)**
- **Ajelis**
**91260 Juvisy-sur-Orge (FR)**

(72) Inventeurs:
- **VIEL, Pascal**
**92190 Meudon (FR)**
- **BENZAQUI, Marvin**
**75013 Paris (FR)**
- **SHILOVA, Ekaterina**
**91260 JUVISY-SUR-ORGE (FR)**

(74) Mandataire: **IPAZ**
**Parc Les Algorithmes, Bâtiment Platon**
**CS 70003 Saint-Aubin**
**91192 Gif-sur-Yvette Cedex (FR)**

(56) Documents cités:
**WO-A1-2012/027242 WO-A1-2014/053345**

- **Anonymous: "Technical information TI/ES 1151 e - Sokalan PA types", , 1 July 1992 (1992-07-01), pages 1-7, XP055529292, Ludwigshafen Retrieved from the Internet: URL:http://www.ilyassonscorp.com/docs/Dispersing%20agent/Sokalan/Sokalan-PA.pdf [retrieved on 2018-12-03]**

Remarques:
Le dossier contient des informations techniques présentées postérieurement au dépôt de la demande et ne figurant pas dans le présent fascicule.

EP 3 331 646 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention concerne des nanofibres polymères gonflables et insolubles dans un effluent essentiellement aqueux et leur utilisation dans le traitement de ces effluents.

La pollution de l'eau par des métaux lourds est un problème environnemental croissant au cours des dernières décennies, qui requiert une action immédiate et urgente.

Les métaux lourds, tels que Zn, Co, Fe, Cr et Cu, sont largement utilisés dans l'industrie des traitements de surface, en relation avec le secteur automobile ou de la microélectronique, pour la mise en œuvre de la galvanoplastie, des procédés electroless ou de l'électrozingage. Malgré le progrès technique, les effluents liquides rejetés par ces industries contiennent toujours inévitablement des traces de métaux lourds, principalement sous forme de sels, qui sont dangereux pour la santé publique et l'environnement et nécessitent un traitement avant leur rejet dans l'environnement.

A ce jour, les normes européennes régulant les taux des différents éléments rejetés sont de plus en plus strictes. Pour les métaux lourds comme le cuivre, le seuil d'autorisation de rejet pour les effluents classiques est descendu de 2mg/L en 1985 à moins de 0,5mg/L depuis 1998, lorsque la quantité journalière de rejet dépasse 5g/jour.

L'industrie nucléaire a aussi le besoin de faire face à la question du traitement des effluents liquides contaminés par des éléments radioactifs, lesquels peuvent être produits lors des opérations de décontamination ou bien lors d'accidents. Par exemple, la catastrophe de Fukushima a rendu des quantités gigantesques d'eau de mer radioactive du fait de la présence de césium radioactif. Ce sont ces milliers de mètre cube d'eau de mer qu'il faut traiter afin d'éliminer les traces de césium radioactif. La difficulté est de capter les atomes de césium présents en très faibles concentrations, de $10^{-7}$ à $10^{-12}$ mol.$L^{-1}$, parmi des atomes de sodium, qui sont au moins 1000 fois plus concentrés.

Pour les terres rares, en plus du souci de santé publique et d'environnement, la récupération et la séparation de ces éléments dans un effluent présente également un enjeu économique considérable. En effet, les terres rares sont utilisées en quantité non négligeable dans les produits de haute technologie et, à cause de leur caractère stratégique et de leur difficulté d'approvisionnement, leur recyclage devient très attractif.

Par conséquent, le traitement des effluents liquides industriels devient un problème majeur dans notre société. Il existe actuellement dans les industries, notamment les industries de traitement de surface, électronique, ou nucléaire, une demande expresse pour de nouveaux procédés plus propres, peu onéreux et pouvant descendre à un seuil de performance jusqu'à dix fois inférieur aux normes en vigueur.

La plupart des méthodes conventionnelles de traitement d'effluents comprennent un traitement primaire suivi d'un traitement secondaire. Le traitement primaire mis en œuvre par coagulation et/ou précipitation permet une élimination des différentes matières polluantes solides. Si ce traitement permet aussi un abaissement de 90% à 95% des métaux présents dans un effluent, il ne permet pas toujours d'atteindre les exigences des normes. Il est nécessaire d'employer un traitement secondaire pour diminuer davantage la teneur en métaux lourds.

Nous pouvons citer comme exemple de méthodes conventionnelles pouvant être utilisées pour un traitement secondaire: les résines échangeuses d'ions, la filtration sur membrane, l'extraction liquide-liquide. Certaines d'entre elles sont assez efficaces, mais ont malheureusement des limites inhérentes telles que les conditions de fonctionnement rigoureux et la production de contaminants secondaires.

Les résines échangeuses d'ions sont largement utilisées pour traiter les effluents contenant des métaux lourds et possèdent de nombreux avantages : leur capacité de traitement, une certaine sélectivité de capture des métaux et leur cinétique rapide par rapport aux autres techniques par exemple membranaires. La plupart des résines sont constituées de billes de polymères synthétiques de très petite taille (50-500 $\mu$m) entre lesquelles l'effluent passe pour se décontaminer. L'efficacité de ces résines est cependant limitée de fait par leur conception. En effet, la grande majorité des résines n'atteignent que 50% de leur capacité d'échange du fait de leur fabrication qui nécessite des fonctionnalisations chimiques qui n'ont pas eu lieu sur tous les sites potentiellement accessibles. D'autre part les résines échangeuses d'ions sont surtout efficaces sur leur périphérie où l'échange peut s'opérer rapidement. La diffusion du liquide en phase solide étant très lente, des canaux de diffusion sont conçus dans la fabrication de ces résines pour améliorer la pénétration de l'effluent au cœur de la bille de résines. Néanmoins la diffusion du liquide en profondeur de résines reste freinée et cela contribue à diminuer la capacité utile des résines. Il serait possible de compenser ce problème en diminuant drastiquement le diamètre des billes pour augmenter le ratio surface/volume. Mais des problèmes de perte de charge (colmatage) et des risques de pulvérulence apparaîtraient alors.

Un autre inconvénient majeur de cette technique est la nécessité d'utiliser de grandes quantités d'acides et de bases concentrés pour réaliser les opérations de régénération. Il est admis que la régénération d'un kilogramme de résines échangeuses d'ions peut nécessiter l'utilisation de plus de 50 litres d'acides et/ou de bases qui deviennent des effluents secondaires. Il est important de minimiser ces effluents secondaires.

Une autre technologie développée depuis une vingtaine d'année consiste à utiliser des techniques membranaires, telles que la microfiltration, la nanofiltration, l'ultrafiltration et l'osmose inverse. Cependant, ces techniques à ce jour sont rarement utilisées dans la séparation des métaux, car les membranes peuvent être mécaniquement fragiles et ne présentent pas de propriétés de sélectivité vis-à-vis des métaux. Par ailleurs, ces techniques sont consommatrices

d'énergie.

Plus récemment, des fibres naturelles, telles que des fibres provenant de coton, champignon, cactus, déchets de l'agriculture vivrière sont utilisées pour la filtration et l'extraction de métaux. Le cout de fabrication de ces fibres est très intéressant, mais leurs performances et surtout leurs sélectivités restent très modestes. Par exemple, la performance d'une membrane obtenue à partir d'un mélange de fibres naturelles en coton et en soie pour capturer le cuivre n'est que de 2,88 mg/g (Ki et al., 2007, Membrane Sci., 302, 20).

Un dernier développement technologique consiste à utiliser des nanofibres, qui ont des diamètres micrométriques ou submicroniques et sont fabriquées soit par électrofilage d'une solution de polymère sous haute tension (électrospinning) ou par application d'une force centrifuge (centrifugal spinning) sur une solution de polymère. Cependant, l'utilisation industrielle de ces nanofibres, souvent sous forme de membrane, reste, à ce jour, dans le domaine de l'ingénierie tissulaire ou comme matériaux super-absorbants, ou encore pour réaliser une filtration mécanique.

A ce jour, plusieurs publications scientifiques ont évoqué l'application des membranes de nanofibres obtenues à partir de différents polymères pour capturer les ions métalliques en solution. Cependant, la performance de ces membranes n'est pas satisfaisante et ne permet pas une productivité à grande échelle.

Ignatova et al. (Macromol. Rapid Commun. 2008, 29, 1871-1876) décrivent l'utilisation de nanofibres de polystyrène associées avec des calixarènes pour capter du nickel. Aucune capacité de capture n'est évoquée dans cet article. Le polystyrène est reconnu comme très hydrophobe et peu gonflable dans l'eau.

On trouve aussi de nombreuses publications sur des fibres de polyacrylonitrile ou de ses dérivés. (F. Huang, Materials 2013, 6, 969-980). Le polyacrylonitrile est lui aussi reconnu pour être peu hydrophile et donc peu gonflable dans l'eau.

Wang et al. (J. Membr. Sci. 2011, 379 191-199) ont analysé une membrane obtenue par électrospinning à partir d'une solution d'alcool polyvinylique (PVA) et de polyéthylènimine (PEI). Sa capacité pour capturer du cuivre est de 67,16 mg/g. Cependant, la régénération de cette membrane nécessite soit des solutions acides ou basiques très fortes soit un complexant organique puissant et toxique, tel que l'EDTA. Par ailleurs, ces polymères ne sont pas suffisamment hydrophiles pour le traitement d'effluents industriels essentiellement aqueux.

Xiao et al. (J. Appl. Polym. Sci., 2010, 116, 2409) ont décrit une membrane obtenue par électrospinning à partir d'une solution d'acide polyacrylique (PAA) et d'alcool polyvinylique (PVA). Sa performance pour capturer le cuivre est d'environ 10 mg/g et reste donc très faible. L'incorporation du PVA dans les polymères initiaux diminue les propriétés hydrophiles des nanofibres pour limiter la solubilisation du PAA.

Li et Hsieh (Polymer 2005, 46, 5133) ont décrit une possibilité de réticuler une nanofibre de PAA pure avec des beta-cyclodextrines. Les auteurs ont choisi de faire réagir les fonctions alcools des cyclodextrines avec les fonctions anhydrides du PAA qui se forment par recuit à 140°C. Cependant, la perméabilité de ce matériau n'est pas suffisante, car la teneur en cyclodextrine d'environ 30% reste élevée. Par ailleurs, les tests pour ce matériau sont réalisés dans un milieu aqueux acide de pH2-7 et sur une durée maximale de 24h. Cette gamme de pH n'a pas d'intérêt technique dans le domaine du retraitement des métaux par le PAA, car ce dernier acquière sa forme complexant dans les milieux basiques.

Comme alternative à l'électropinning, des techniques basées sur la force centrifuge (centrifugal spinning) ont été développées récemment, telles que par exemple, la technique forcespinning® (Sarkar et al., Materials Today, 2010, 13(11), p12-14). Cependant, à ce jour, il n'y a pas d'application des nanofibres obtenues par cette technologie dans la séparation d'ions en solution.

WO 2012/027242 A1 divulgue des nanofibres sous forme d'une membrane, ces nanofibres étant constituées de l'acide polyacrylique, de polystyrène sulfonate, de la poly(4-vinylpyridine) ou de l'alcool polyvinylique, éventuellement réticulé. Les nanofibres ont un diamètre compris entre 3 nm à 50 nm. Ces nanofibres sont produites par électrospinning. WO 2012/027242 A1 divulgue également l'utilisation de ces membranes pour traiter des effluents contenant des métaux lourds tels que l'uranium ou le chrome.

Les nanofibres décrites dans ces publications antérieures ne peuvent pas être appliquées à l'échelle industrielle pour extraire et séparer les métaux, car d'une part elles ne sont pas suffisamment hydrophiles dans un effluent essentiellement aqueux et n'ont pas une capacité ou spécificité satisfaisante pour capturer les métaux et d'autre part elles nécessitent en plus un temps de capture ou régénération très long.

Pour répondre à cette problématique, il y a un très fort intérêt de développer des nanofibres ayant une très forte perméabilité à l'eau et qui ne se dissolvent pas. Pour améliorer les propriétés de ces nanofibres vis-à-vis de cibles métalliques difficiles à extraire ou interférées par des éléments de peu d'intérêt, ces nanofibres pourront contenir des molécules complexant possédant des propriétés de capture très spécifiques.

L'invention a pour objet de mettre à disposition un matériau ayant une meilleure performance pour capturer les métaux, notamment les sels métalliques issus des métaux lourds, des terres rares, des métaux alcalins, des alcalino-terreux, ou des actinides, dans leurs formes isotopiques stables ou instables, et restant faciles à régénérer afin de récupérer les métaux capturés.

L'invention porte donc sur des nanofibres selon la revendication 1.

Les nanofibres insolubles de la présente invention présentent plusieurs avantages par rapport aux matériaux actuellement utilisés dans le traitement d'effluents essentiellement aqueux, notamment par rapport aux résines échangeuses d'ions.

L'un des avantages principaux est leur performance par rapport aux méthodes conventionnelles, notamment les résines échangeuses d'ion, pour capturer les métaux, notamment les sels métalliques issus des métaux lourds, des terres rares, des métaux alcalins, des alcalino-terreux, ou des actinides, dans leurs formes isotopiques stables ou instables. Cette performance est liée à un échange rapide des sels entre l'effluent à traiter et lesdites nanofibres, grâce à leur surface spécifique très élevée et leur propriété de gonflement très importante de sorte que c'est réellement tout le volume de la nanofibre qui participe à l'interaction avec l'effluent. Il en résulte ainsi de plus faibles distances à parcourir dans la phase solide par le métal à capter. Ces bénéfices sont observables également sur les étapes de régénération des fibres. En effet, le volume d'élution pour récupérer les métaux captés par les nanofibres insolubles de l'invention est réduit par rapport à celui nécessaire pour les résines de même capacité.

A titre comparatif, la surface spécifique d'une membrane constituée par des nanofibres de l'invention peut être 100 fois plus élevée que celle des résines obtenues à partir d'une même quantité de polymère initial.

De plus, lorsque ces nanofibres contiennent des molécules complexantes leur conférant des propriétés de sélectivité vis-à-vis des ions cibles, ceux-ci, grâce aux propriétés de gonflement des nanofibres, peuvent accéder facilement au cœur même des fibres pour y être captés. Ceci n'est pas possible avec les résines qui doivent être post-fonctionnalisées pour posséder une certaine sélectivité, post-fonctionnalisation s'effectuant essentiellement sur leur périphérie et qui, pour des raisons stériques, réduit l'accès au cœur des résines, diminuant ainsi leur capacité effective.

Enfin, la possibilité d'incorporer facilement et de façon stable des molécules complexant hydrophobes, telles que des calixarènes par exemple, par simple rétention au cœur des nanofibres, permet d'obtenir, très simplement, une grande variété de nanofibres aux sélectivités dédiées.

Dans le cadre de l'invention, on entend par « nanofibre », des fibres micrométriques ou submicroniques dont le diamètre est de 50 nm à 10 $\mu$m, notamment de 100 nm à 5 $\mu$m, plus particulièrement de 100 nm à 1 $\mu$m.

On entend par « effluent essentiellement aqueux » un effluent aqueux contenant éventuellement des traces de solvants organiques jusqu'à 5%. Les solvants organiques peuvent notamment être présents dans un effluent, lorsque ledit effluent est issu d'un procédé liquide-liquide conventionnel pour l'extraction des terres rares ou des métaux lourds.

Le terme « insoluble » dans le cadre de l'invention signifie que la morphologie des nanofibres ne subit pas de modifications détectables à l'aide d'un microscope électronique après au moins 24 heures d'immersion dans un effluent essentiellement aqueux tel que défini précédemment.

Le terme « gonflable » se réfère à la capacité d'un matériau, en l'occurrence des nanofibres insolubles de l'invention, de laisser l'eau pénétrer à l'intérieur et dans tout le volume des nanofibres. Dans le cadre de l'invention, la totalité ou au moins supérieur à 95% des groupements chimiques des sites actifs (tels que -COOH ou $-COO^-$ selon le pH de la solution pour les nanofibres de PAA, par exemple) des nanofibres de l'invention sont en contact avec l'effluent aqueux.

La propriété de gonflement des nanofibres insolubles de l'invention permet aux sites actifs même s'ils sont présents dans la profondeur d'une nanofibre de pouvoir être directement en contact avec l'effluent à traiter et par conséquent de rester opérationnel pour capturer les métaux. Un site actif est un groupement chimique ou une structure chimique constituée par plusieurs groupements chimiques capable de former un complexe ou un sel avec un métal ou un élément. Dans le cadre de la présente invention, un site actif peut être compris comme un domaine complexant, il peut être porté ou formé par les chaines de polymères ou par une molécule complexante.

Conformément à l'invention, le contact des nanofibres insolubles de l'invention avec un effluent essentiellement aqueux produit un gonflement rapide et complet compris entre 30 secondes et 3 min.

On entend par « gonflement complet » la totalité ou au moins supérieur à 95% des groupements chimiques des sites actifs des nanofibres de l'invention sont en contact avec l'effluent aqueux.

Etant donné que les polymères initiaux utilisés pour produire les nanofibres insolubles de l'invention sont des polymères hydrophiles et hydrosolubles, l'insolubilité, c'est-à-dire la résistance à la solubilisation, des nanofibres de l'invention est conférée par la réticulation et la capacité de gonflement de ces nanofibres est influencée essentiellement par le taux de réticulation desdites nanofibres.

Le taux de réticulation correspond à la proportion de liaisons chimiques covalentes entre chaines polymères voisines. Il est calculé en pourcentage de motifs monomères des chaines polymères engagés dans ces liaisons interchaines. Il peut être mesuré par calorimétrie différentielle à balayage.

Le taux de réticulation est en relation avec la masse moléculaire de polymère initial hydrophile et hydrosoluble.

Ce taux influence à la fois, positivement l'insolubilité des nanofibres produites par ledit polymère et, négativement leur capacité de gonflement. Autrement dit, à un taux de réticulation élevé correspond une plus grande résistance à la solubilisation des nanofibres mais une plus faible capacité de gonflement desdites nanofibres. Le taux de réticulation doit donc être optimisé en tenant compte de ces deux paramètres antagonistes.

L'utilisation privilégiée d'un polymère de poids moléculaire élevé conduit à diminuer le taux de réticulation

nécessaire pour que les nanofibres satisfassent aux critères d'insolubilité et de gonflement. Ainsi les Inventeurs ont trouvé qu'un taux de réticulation limité entre 5 et 40%, particulièrement de 5 à 20%, notamment à 15%, pour les nanofibres insolubles et une masse moléculaire de $1x10^4$ à $1,5x10^6$ pour le polymère initial sont respectivement les valeurs les plus optimales pour ces deux paramètres. Cette combinaison permet de préserver la propriété de gonflement de polymère initial, tout en assurant l'insolubilité des nanofibres de l'invention.

Les Inventeurs constatent que, pour un taux donné d'agent réticulant, la réticulation des polymères ayant une masse moléculaire élevée est plus efficace que celle des polymères avec des masses moléculaires faibles. En effet, lorsque la masse moléculaire d'un polymère initial est trop petite, il est nécessaire d'augmenter le pourcentage d'agent réticulant pour obtenir le même taux de réticulation. Le pourcentage trop élevé d'agent réticulant dans une solution de synthèse initiale entraîne une perte des propriétés de gonflement, recherchées pour les nanofibres de l'invention.

En revanche, lorsque la masse moléculaire de polymère est trop élevée, ce polymère présente une trop faible solubilité dans l'eau. Une solution de synthèse ayant une trop faible concentration en polymère soluble ne permet pas de produire des nanofibres à partir de cette solution de synthèse.

• **Polymère initial**

Les polymères initiaux hydrophiles et hydrosolubles confèrent aux nanofibres insolubles de l'invention leurs propriétés de perméabilité à l'eau. Les polymères susceptibles d'être utilisés en tant que polymère initial hydrophile et hydrosoluble dans le cadre de l'invention sont sélectionnés pour leurs capacités à capter des sels métalliques selon un principe de type résine échangeuse d'ions. Par exemple, l'acide polyacrylique ou la poly(4-vinylpyridine) peut être sélectionné lorsque les nanofibres de l'invention sont mises en œuvre dans les applications requérant une faible sélectivité. Les additifs, notamment les molécules complexant, peuvent être ajoutés pour conférer aux nanofibres de l'invention des propriétés plus spécifiques.

Les polymères initiaux pour la mise en œuvre de l'invention sont les polymères hydrophiles. Cette affinité pour l'eau permet à l'effluent de pénétrer efficacement le matériau et ainsi de mettre rapidement en contact les métaux ou les éléments à capturer avec les sites actifs.

Conformément à l'invention, ces polymères sont notamment choisis parmi :

- l'acide polyacrylique ou les copolymères de l'acide polyacrylique,
- les dérivés anioniques de polystyrène, tels que le polystyrène sulfonate ou les copolymères du polystyrène sulfonate,
- les dérivés cationiques de polystyrène, tels que le polystyrène trialkylbenzyl ammonium,
- la poly(4-vinylpyridine) ou ses dérivés,
- l'alcool polyvinylique ou ses dérivés hydrophiles,
- la polyvinylpyrrolidone, ses dérivés, ou ses copolymères, et
- les mélanges de ceux-ci.

On entend par « acide polyacrylique » un homopolymère d'acide acrylique et présentant le motif de répétition suivant :

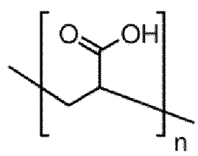

Lorsque le polymère initial est l'acide polyacrylique, il peut comporter les groupements carboxyles sous forme réduite (-COOH) ou ionisée ($-COO^-$).

De préférence, le $pK_A$ de l'acide polyacrylique en tant que polymère initial dans une solution aqueuse est de 4,25.

Dans un mode de réalisation avantageux de l'invention, la masse moléculaire de l'acide polyacrylique en tant que polymère initial est de $1,3x10^5$ à $2,5x10^5$.

On entend par un copolymère de l'acide polyacrylique un polymère issu de la copolymérisation de l'acide acrylique et un autre monomère, tel que l'acide maléique ou le styrène.

A titre d'exemple, on peut citer les copolymères de l'acide polyacrylique comme le copolymère d'acide acrylique-acide maléique sodium de formule ci-après.

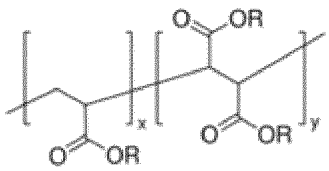

R = H ou Na

ou un copolymère styrène/acide acrylique de formule ci-après

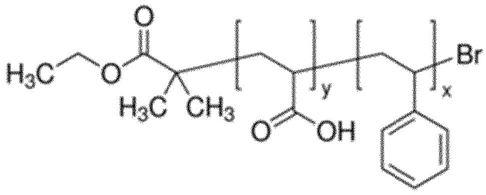

.

L'acide polyacrylique et ses co-polymères peuvent être utilisés pour capturer les métaux lourds, notamment le cuivre, par l'intermédiaire des groupements carboxyles ionisés.

Conformément à l'invention, un dérivé anionique du polystyrène est un polymère substitué du polystyrène par un groupement anionique tel qu'un groupe sulfonate, phosphate, phosphonate, phosphoryle, carboxyle, tel que le groupe carboxyméthyle.

A titre d'exemple de dérivé anionique du polystyrène peut être cité notamment le polystyrène sulfonate, le polystyrène phosphonate, le carboxypolystyrène, le polystyrène A-COOH.

A titre d'exemple des copolymères du polystyrène sulfonate, on peut citer un copolymère d'acide styrènesulfonique et d'acide maléique de formule ci-après

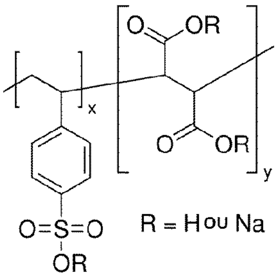

R = H ou Na

.

Conformément à l'invention, un dérivé cationique de polystyrène est un polymère substitué du polystyrène par un groupement cationique tel qu'un groupement d'ammonium quaternaire, notamment un groupement d'ammonium trialkyle benzyle, ou un groupement amine tertiaire.

A titre d'exemple de dérivé cationique du polystyrène peut être cité un polystyrène substitué par un groupement d'ammonium trialkyle benzyle, notamment un groupement d'ammonium triméthyle benzyle.

Les dérivés cationiques du polystyrène ont une sélectivité pour les sels anioniques des éléments à capturer, tels que l'anion $UO^{2-}$.

On entend par « poly(4-vinylpyridine) » un homopolymère de 4-vinyl pyridine et présentant le motif de répétition suivant :

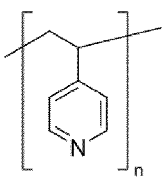

.

Un dérivé de la poly(4-vinylpyridine) est une poly(4-vinylpyridine) substituée en position méta ou ortho de la pyridine, la poly-3-vinylpyridine ou la poly-2-vinylpyridine, respectivement.

Les groupes pyridines, éventuellement substitués, peuvent complexer les cations des métaux lourds, notamment les dications, telles que $Hg^{2+}$, $Cu^{2+}$.

On entend par « alcool polyvinylique » une famille de polymères obtenus par alcoolyse d'un ester vinylique et contenant une proportion au moins supérieure à 50% du motif élémentaire :$-(CH_2CHOH)_n-$.

Dans le cadre de l'invention, On entend par « dérivé de l'alcool polyvinylique » les copolymères vinylique-alcool vinylique.

On entend par « polyvinylpyrrolidone » un homopolymère de la *N*-vinylpyrrolidone.

On entend par un copolymère de la polyvinylpyrrolidone un polymère issu de la copolymérisation de la *N*-vinylpyrrolidone et un autre monomère. A titre d'exemple des copolymères de la polyvinylpyrrolidone, on peut citer le poly[(2-éthyldiméthylammonioéthyl méthacrylate éthyle sulfate)-co-(l-vinylpyrrolidone)] (PNR4).

• **Additifs**

Une solution de synthèse pour l'électrospinning ou le centrifugal spinning peut en outre comprendre, en plus du polymère initial hydrophile et hydrosoluble, au moins un additif.

Conformément à l'invention, un additif, lorsqu'il est présent dans une solution de synthèse, peut être soit incorporé dans les nanofibres de l'invention par réticulation avec les polymères, tel le cas pour un agent réticulant, ou soit simplement immobilisé dans la matrice des nanofibres lorsque ledit additif est hydrophobe, tel qu'une molécule complexante non réticulant.

Les additifs peuvent être de deux natures : les agents réticulants, comme les agents réticulants chimiques ou photochimiques et les molécules complexantes, comme des molécules cages. Les molécules complexantes peuvent agir soit seulement en tant qu'agent de complexation, soit en tant qu'agent de complexation et de réticulation lorsqu'elles comportent, en plus de leurs fonctions complexantes, des fonctions chimiques ou photochimiques permettant une réticulation avec les polymères initiaux hydrophiles.

Les molécules complexantes apportent aux nanofibres de l'invention les spécificités vis-à-vis des métaux à capturer. Elles sont conçues pour capter très sélectivement un sel ou seulement certains sels métalliques.

Selon le besoin de propriétés spécifiques et de la nature hydrophile ou hydrophobe des molécules complexantes, quatre cas de figures sont possibles pour la constitution des nanofibres de la présente invention :

- La réticulation peut être faite en absence d'un agent réticulant, telle que par traitement VUV ou UV;
- La réticulation peut être faite par des agents réticulants chimiques qui comportent des fonctions chimiques permettant une réticulation avec les polymères initiaux hydrophiles ou par des agents réticulants photochimiques qui comportent des fonctions photoactivables par rayonnement VUV, UV ou visible ;
- En présence de molécules complexantes comportant, en plus de leurs fonctions de complexation, des fonctions chimiques ou photochimique permettant une réticulation, la réticulation peut être faite par les molécules complexantes elles-mêmes. La réticulation du polymère initial hydrophile et hydrosoluble par ces molécules complexantes permet de fixer ces dernières dans la structure des nanofibres et d'éviter leur extraction au cours de l'usage des nanofibres insolubles de l'invention.
- En présence de molécules complexantes hydrophobes, il n'est pas nécessaire de les fixer par réticulation dans le polymère initial hydrophile et hydrosoluble. Les molécules complexantes hydrophobes peuvent être simplement immobilisées par rétention hydrophobe via un processus d'imprégnation par solvant. Ce phénomène de rétention hydrophobe est suffisamment fort pour éviter l'extraction de ces molécules complexant hydrophobes par un effluent essentiellement aqueux au cours de l'usage des nanofibres. En revanche, la réticulation du polymère initial hydrophile et hydrosoluble par un autre moyen reste nécessaire pour stabiliser les nanofibres.

On entend par « agent réticulant » un composé qui relie des chaînes de polymères par des liaisons chimiques, notamment des liaisons covalentes, afin de constituer un réseau de masse moléculaire plus élevée et présentant des propriétés physico-chimiques différentes du polymère initial, par exemple l'insolubilité dans un effluent essentiellement aqueux.

Conformément à l'invention, pour que les nanofibres à base de polymères hydrophiles et hydrosolubles soient insolubles dans un effluent essentiellement aqueux, il faut que ces nanofibres soient stabilisées par réticulation avec un taux de réticulation contrôlé. Pour que la réticulation puisse avoir lieu avec un taux de réticulation compris entre 5 et 40%, particulièrement de 5 à 20%, notamment à 15%, la quantité dudit agent réticulant doit être de 0,05 à 40 %, notamment de 1 à 40%, particulièrement de 5 à 20%, plus particulièrement 15% en poids relativement au poids du polymère initial hydrophile et hydrosoluble dans la solution de synthèse.

D'une façon générale, la quantité d'agent réticulant introduite dans la solution de synthèse est déterminée en fonction de la masse molaire du polymère initial. Ainsi, si la masse molaire du polymère initial est élevée, on choisira un faible pourcentage d'agent réticulant ; si la masse molaire du polymère initial est faible, on choisira plutôt un pourcentage plus élevé pour l'agent réticulant.

Conformément à l'invention, ledit agent réticulant est choisi dans le groupe comprenant :

- un diazoture, notamment le diazidostilbène,
- une diamine, notamment l'hexaméthylènediamine,
- un polymère hydrophile choisi dans le groupe comprenant un polyéthylène glycol, un polyhydroxyéthyl méthacrylate, le polyvinylpyrrolidone, ses dérivés ou ses copolymères,
- un dibromoalcane en ($C_1$-$C_{10}$), notamment le 1,4-dibromo butane
- un dibromo-p-xylène
- un diiodoalcane en ($C_1$-$C_{10}$) notamment le 1,4-diiodo butane,
- un dichloroalcane en ($C_1$-$C_{10}$) notamment le 1,4-dichloro butane, et
- un calixarène de formule I :

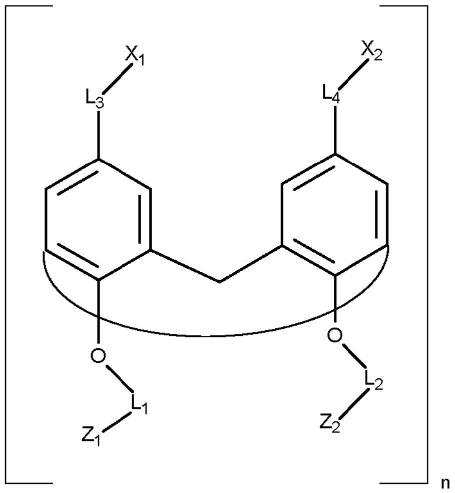

(I),

dans laquelle :

- $X_1$ et $X_2$ représentent chacun indépendamment l'un de l'autre H ou un groupe

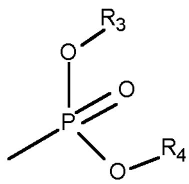

,

dans lequel R3 et R4 représentent chacun, indépendamment l'un de l'autre, H ou un groupe alkyle en ($C_1$-$C_8$), à condition que $X_1$ et $X_2$ ne représentent pas simultanément H,
- $L_1$, $L_2$, $L_3$ et $L_4$ sont des groupements espaceurs, choisis indépendamment les uns des autres, dans le groupe consistant en un cycloalkylènyle en ($C_3$-$C_{10}$), O, NH, $-(CH_2)_q-$, q étant un nombre entier de 1 à 12,
- $Z_1$ et $Z_2$ représentent chacun, indépendamment l'un de l'autre, un groupement fonctionnel choisi parmi une amine éventuellement protégée, F, Cl, Br, I, OH, C(=O)H, C(=O)Hal, un groupe aryle ou un groupe aryle substitué, tel qu'un tosyle, un groupement diazonium, un hétérocycle aromatique tel qu'un groupe pyrrolyle, furyle, thiényle, ou pyridinyle, un groupe sulfate ou sulfonate éventuellement protégé,
- n est un nombre entier de 1 à 10 ; ou

un calixarène de formule II

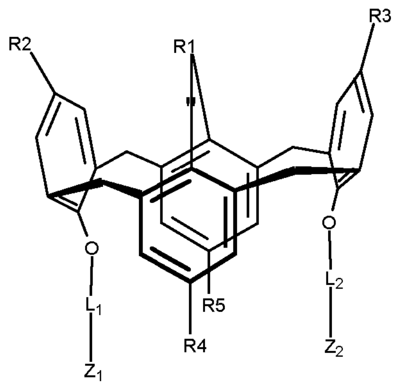

(II),

dans laquelle :

- R1 est choisi parmi $-X(C_2H_4X)_m-$, ou $-X(C_2H_4X)_{p/2}YX(C_2H_4)_{p/2}-$, X étant choisi indépendamment parmi O et/ou N, m étant égale à 3, 4, 5 ou 6, p étant égale à 2 ou 4, Y étant un cycloalkylène en $(C_3-C_{10})$ ou un arylène en $(C_6-C_{10})$; et
- $R_2$ à $R_5$ sont choisis indépendamment l'un de l'autre parmi H, ou un alkyle $(C_1-C_6)$;
- $L_1$ et $L_2$ sont des groupements espaceurs, choisis indépendamment les uns des autres, parmi un cycloalkylène en $(C_3-C_{10})$ ou un arylène en $(C_3-C_{10})$, $-(CH_2)_q-$, q étant un nombre entier de 1 à 12 ;
- $Z_1$, $Z_2$ sont des groupements de greffage, choisis indépendamment les uns des autres, parmi F, Cl, Br, I, $-OHNH_2$, -C(=O)OH, -C(=O)Hal, un groupe aryle ou un groupe aryle substitué, tel qu'un tosyle, un groupement diazonium, un hétérocycle aromatique tel qu'un groupe pyrrolyle, furyle, thiényle, ou pyridinyle, un groupe sulfate ou sulfonate éventuellement protégé.

Dans les calixarènes de formule I ou II, l'ensemble $L_1$-$Z_1$ et $L_2$-$Z_2$ constitue des bras de réticulation.

Dans un mode particulier de l'invention, lorsque le polymère initial est l'acide polyacrylique ou ses copolymères, ledit agent réticulant est de préférence un diazoture, une diamine, un polyéthylène glycol ou un polyhydroxyéthyl méthacrylate.

Lors de la stabilisation des nanofibres, la diamine forme des liaisons amides (-CO-NH-) inter-chaînes avec l'acide polyacrylique ou ses dérivés anioniques. Un polyéthylène glycol ou un polyhydroxyéthyl méthacrylate comme agent réticulant forme avec les polymères initiaux hydrophiles des liaisons inter-chaines de type ester.

Conformément à l'invention, la diamine peut être notamment choisie parmi l'éthylènediamine, le 1,3-diaminopropane, le 1,4-diaminobutane, le 1,5-diaminopentane, et la hexaméthylènediamine.

Dans un autre mode particulier de l'invention, lorsque le polymère initial est la poly(4-vinylpyridine) ou ses dérivés, ledit agent réticulant est de préférence un diazoture, notamment le diazidostilbène (DAS), un dibromoalcane en $(C_1-C_{10})$ ou un diiodoalcane en $(C_1-C_{10})$, notamment le 1,4-dibromobutane ou le 1,4- diiodobutane.

Dans une solution de synthèse conformément à la présente invention, le polyvinylpyrrolidone, ses dérivés et ses copolymères peuvent être utilisés à la fois comme un polymère initial hydrophile et hydrosoluble et comme un agent réticulant.

Lors de la stabilisation des nanofibres en présence d'un agent réticulant de type diazoture, la photoactivation du groupement diazoture conduit à la formation d'un groupement nitrène, intermédiaire réactionnel intervenant dans de nombreuses réactions chimiques telles que les réactions d'insertion notamment dans une liaison C-H, O-H, ou N-H. Les diazotures sont donc particulièrement bien adaptés pour réticuler tout type de polymère utilisé dans l'invention.

Conformément à l'invention, le diazoture peut être un diazoture disponible commercialement tel que le diazidostylbène (DAS) ou facilement fabriqué selon une méthode connue de l'homme du métier, telle qu'en faisant réagir un précurseur azidoaniline sur des composés dianhydrides terminaux longs en $(C_4-C_{10})$, ou sur un polymère dianhydride tel que le polyethylméthacrylateanhydride (PEMA).

Lorsque l'agent réticulant est une diamine, sa quantité est de préférence de 5 à 20%, en particulier de 15%, en poids relativement au poids de polymère initial hydrophile et hydrosoluble dans la solution de synthèse.

Lorsque l'agent réticulant est un diazoture, sa quantité est de préférence de 1 à 40%, en particulier de 1 à 20%, en poids relativement au poids de polymère initial hydrophile et hydrosoluble dans la solution de synthèse.

Lorsque l'agent réticulant comporte un groupe photoactivable, tel qu'un diazoture, la photoactivation est réalisée par irradiation UV/visible, typiquement à 365 nm.

Dans un mode de réalisation de l'invention, la susdite solution de synthèse contenant un polymère initial

hydrophile et hydrosoluble comprend en outre un calixarène de formule I ou de formule II tel que défini auparavant comme agent réticulant.

Dans un calixrène de formule I ou II, les radicaux $Z_1$ et $Z_2$ permettent de mettre en œuvre la réticulation avec les chaînes de polymère initial hydrophile et hydrosoluble.

Conformément à l'invention, ces calixarènes sont notamment ceux décrits dans la demande FR 14/52958 et ceux décrits dans la demande internationale WO 2013/124831.

De préférence, ledit calixarène est choisi parmi les composés A et/ou B ci-après:

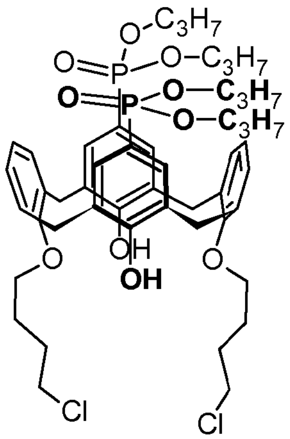

Composé A

,

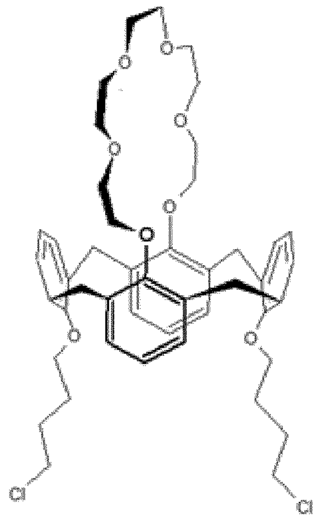

Composé B

En plus de leur rôle structurel lorsqu'ils sont utilisés en tant qu'agent réticulant, les calixarènes confèrent aux nanofibres de l'invention une sélectivité vis-à-vis de certaines terres rares, ou de certains radionucléides comme le césium.

Dans un mode particulier et en raison de leur hydrophobicité, les calixarènes non réticulant peuvent également être incorporés de façon stable dans les nanofibres insolubles de l'invention sans qu'il soit nécessaire de les réticuler avec cette matrice. Si le calixarène est suffisamment hydrophobe, il est incorporé et immobilisé dans les nanofibres, par rétention hydrophobe via un processus d'imprégnation par solvant, et le calixarène ainsi retenu ne peut pas être extrait par le milieu aqueux dans lequel il n'est pas soluble. Le calixarène est typiquement immobilisé dans les nanofibres par des interactions Pi-Pi et/ou des liaisons Van der waals. Les nanofibres stabilisées restant perméables à l'eau, elles permettent alors de mettre en contact la phase aqueuse avec le calixarène d'intérêt.

L'incorporation des calixarènes dans les nanofibres insolubles de l'invention peut se faire au moment de la synthèse des nanofibres en ajoutant le calixarène d'intérêt dans la solution de synthèse. De cette façon les calixarènes se répartissent de façon homogène dans les nanofibres produites par électrospinning ou par centrifugal spinning.

L'incorporation peut aussi se faire après la synthèse et la stabilisation des nanofibres, à l'aide d'un solvant à la fois capable de dissoudre les calixarènes et pouvant gonfler aisément les nanofibres sans les dissoudre. Un tel solvant peut être choisi parmi les alcools, le tétrahydrofurane (THF) ou le diméthylformamide (DMF) pour incorporer les calixarènes dans l'acide polyacrylique ou la poly(4-vinylpyridine). Ce mode d'incorporation de calixarènes peut être mis en œuvre par la méthode suivante :

- imprégner les nanofibres issues de la stabilisation par immersion dans une solution contenant un solvant convenable tel que décrit ci-dessus et les calixarènes hydrophobes,
- récupérer les nanofibres ainsi imprégnées et
- éliminer le solvant par séchage à sec.

Dans ce cas de figures, il n'est pas nécessaire que ces calixarènes comportent des groupes fonctionnels, tels que les groupes $Z_1$, $Z_2$ pour les calixarènes de formule I ou II, qui leur permettent de réticuler avec un polymère.

Ces calixarènes sont bien connus de l'homme du métier.

A titre d'exemple de calixarènes non réticulants hydrophobes qui peuvent être incorporés dans les nanofibres de l'invention, nous pouvons citer :

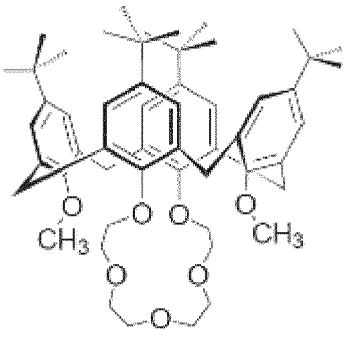
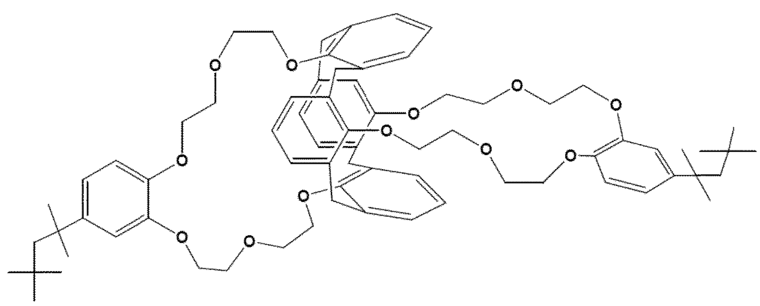
,

.

• **Solution de synthèse**

On entend par « solution de synthèse » une solution liquide aqueuse ou organique comprenant un ou un mélange de solvant.

Ladite solution peut être une solution aqueuse comprenant un autre solvant organique miscible à l'eau, tel que l'éthanol, le propanol, le tétrahydrofurane (THF), ou un mélange de ceux-ci. La présence d'un solvant organique peut être utile pour préparer des nanofibres à matrice mixte dans laquelle certaines molécules sont solubles dans un solvant organique et non dans l'eau.

Par exemple, on privilégiera une solution aqueuse pour solubiliser un agent réticulant aminé tel qu'une diamine, plutôt qu'une solution de synthèse organique car cette dernière favorise la formation de paires ioniques liées entre les amines et les acides, ce qui limite la solubilité du polymère et conduit à sa précipitation. Si toutefois, on est amené à travailler en milieu organique en présence d'un agent réticulant aminé, le milieu est acidifié ($pH<4$) pour éviter la précipitation du polymère.

Une solution de synthèse organique, notamment une solution alcoolique, peut être utilisée pour solubiliser les calixarènes qui n'ont qu'une faible solubilité dans l'eau. On entend par « solution alcoolique » l'éthanol pur utilisé en tant que solvant.

Dans un mode de réalisation, pour préparer les nanofibres de l'invention dans lesquelles les calixarènes sont réticulés directement avec l'acide polyacrylique, la solution de synthèse est un mélange d'une solution alcoolique dans laquelle est dissous l'acide polyacrylique et du THF dans lequel sont dissous des calixarènes. L'éthanol et le THF sont miscibles.

Dans un autre mode de réalisation, pour préparer les nanofibres de l'invention contenant les calixarènes dans lesquelles l'acide polyacrylique est réticulé à l'aide de l'agent réticulant HMDA, la solution de synthèse est une solution alcoolique acidifiée, notamment à pH2, afin d'éviter la précipitation des calixarènes.

Dans un mode de réalisation avantageux, la susdite solution aqueuse est une solution eau/éthanol.

Dans un mode de réalisation avantageux, les solvants dans ladite solution de synthèse sont l'éthanol et le THF.

• **Electrospinning**

Le terme « électrospinning » se réfère à un procédé consistant à injecter, sous haute tension électrique, une solution de polymère à travers une aiguille pour produire des nanofibres. Cette technologie permet de produire des fibres de polymères longs avec un diamètre dans la gamme du nanomètre à quelques microns et d'obtenir un matériau nanostructuré avec une surface spécifique et une porosité très élevée par rapport aux résines.

La technologie de l'électrospinning a été décrite dans l'art antérieur (Li et Xia, Advanced Materials 2004,16 (14): 1151) et est bien connue de l'homme du métier.

L'électrospinning d'une solution de polymère selon la susdite étape (a) peut être mis en œuvre à l'aide d'un dispositif industriel disponible à ce jour pour ce procédé, par exemple l'équipement « SPIN Line 120 » de la société SPUR ou l'équipement « NANOSPINNER 416 » de la société INOVENSO.

La tension électrique appliquée est celle qui permet de dépasser la tension superficielle de la solution de synthèse de polymère et peut varier entre 0 et 100kV suivant les alimentations utilisées.

Les nanofibres produites par électrospinning peuvent être déposées sur un collecteur conducteur pour former une membrane.

La distance entre l'aiguille et le collecteur de nanofibres est une distance qui permet l'évaporation totale de l'eau et d'autre solvant éventuel dans ladite solution de synthèse de polymère et la solidification du polymère. Cette

distance peut être déterminée selon la quantité et la nature du solvant et la concentration en polymère dans ladite solution de synthèse.

L'électrospinning pour la production des nanofibres de l'invention peut être tout type d'électrospinning connu dans l'art, notamment l'électrospinning de type « free surface », lors de la mise en œuvre duquel la solution de synthèse est polarisée sur la surface d'un rouleau qui tourne dans une solution de synthèse contenant un polymère initial hydrophile et hydrosoluble. La haute tension s'exerce entre la partie supérieure du rouleau mouillée par la solution de synthèse et la contre électrode mise au-dessus. Les nanofibres se forment à partir de la surface du rouleau de façon aléatoire mais en plus grande quantité. Ce type d'électrospinning permet une production industrielle.

• **Centrifugal spinning**

Le terme « centrifugal spinning», ou « forcespinning® » ou « high-speed rotary spinning », se réfère à un procédé utilisant des forces centrifuges qui permettent à une solution de synthèse de traverser les orifices de la filière pour produire des nanofibres. En effet, à l'extérieur de la filière, le jet de la solution de synthèse subit une force de cisaillement qui contribue à évaporer l'eau ou d'autre solvant éventuel contenu dans la solution de synthèse et forme une membrane en se déposant sur un collecteur. Le centrifugal spinning permet de produire des nanofibres sans l'utilisation d'un champ électrique et peut être par conséquent appliqué à des solutions de synthèse non-conductrices.

Ces techniques largement utilisées dans le domaine des fibres de verre ont été très récemment adaptées aux fibres de polymères (Sarkar et al., Materials Today, 2010, 13(11), p12-14) et représentent une alternative à l'électrospinning intéressante pour produire des nanofibres en grande quantité et à faible coût (Zhang et Lu, Polymer Reviews, 2014, 54:677-701).

Les dispositifs pour la mise en œuvre du centrifugal spinning sont disponibles sur le marché, par exemple les dispositifs forcespinnig® commercialisés par la société FIBERIO.

Les principaux paramètres influençant la formation et la morphologie des nanofibres sont la concentration de la solution de synthèse, sa viscosité, la vitesse de rotation de la filière, la distance entre le collecteur et la filière, ainsi que le calibre des orifices de la filière.

La vitesse de rotation de la filière est une vitesse suffisante qui permet à la solution de synthèse de traverser les orifices sur la paroi de la filière, et notamment de 3000 à 5000 tpm.

La distance entre la filière et le collecteur de nanofibres est une distance qui permet l'évaporation totale de l'eau et d'autres solvants éventuels présents dans ladite solution de synthèse et la solidification du polymère. Cette distance peut être déterminée selon la quantité et la nature du solvant et la concentration en polymère dans ladite solution de synthèse.

• **Stabilisation des nanofibres**

Le processus de réticulation permet de stabiliser les nanofibres issues du procédé d'électrospinning ou de centrifugal spinning et de les rendre insolubles dans un effluent essentiellement aqueux.

Conformément à l'invention, la stabilisation des nanofibres obtenues par électrospinning ou centrifugal spinning est mise en œuvre par un traitement thermique ou par radiation de rayons ultra-violets de type VUV (Vacuum Ultra-Violet) ou UV ou par rayonnement visible.

> Traitement par radiation

Le traitement par radiation a pour objectif de créer au sein des nanofibres des états excités qui génèrent des radicaux libres pouvant effectuer une réaction chimique entre eux ou avec des agents réticulants pour que la réticulation puisse avoir lieu.

A titre comparatif, en absence de stabilisation, les nanofibres fabriquées à partir de polymères hydrophiles sont totalement solubles dans l'eau ou l'éthanol.

Selon le type de rayonnement choisi, la réticulation des nanofibres peut être effectuée soit à l'aide d'un agent réticulant, soit sans agent réticulant.

En règle générale, un rayonnement VUV ou UV est énergiquement plus performant qu'un rayonnement visible ou un traitement thermique et peut être mis en œuvre seul sans besoin d'un agent réticulant.

Conformément à l'invention, un rayonnement VUV est un rayonnement à une longueur d'onde comprise entre 100-200 nm, notamment entre 160-180 nm, plus particulièrement à 172 nm, et peut par exemple être produit par une lampe excimère au Xénon.

A titre d'exemple, le rayonnement de 172 nm de la lampe Excimer de la marque OSRAM de type XERADEX® permet de casser les liaisons de l'acide polyacrylique ou d'un dérivé anionique de l'acide polyacrylique, ou les liaisons de la poly(4-vinylpyridine) ou ses dérivés et de créer ainsi des espèces excitées, notamment des radicaux et/ou des

ions, permettant une réaction chimique entre eux.

La durée de rayonnement peut être de 0,5 à 15 min. Typiquement cette durée est de 2 minutes à 15 cm de distance pour le PAA et de 2 minutes à 4 cm de distance pour la P4VP.

Conformément à l'invention, un rayonnement UV est un rayonnement à une longueur d'onde comprise entre 100-400 nm, notamment entre 200-400 nm, plus particulièrement à 254 nm, et peut par exemple être produit par une lampe de laboratoire de type Fischer Scientific. La durée de rayonnement peut être de 0,1 seconde à 60 min en fonction de la puissance de l'irradiation utilisée. La puissance du rayonnement électromagnétique est typiquement de 35-40 $mW/cm^2$.

Conformément à l'invention, un rayonnement visible est un rayonnement à une longueur d'onde comprise entre 200-1000 nm, notamment entre 400-800 nm, et peut par exemple être produit par la lumière solaire ou par une lampe appropriée. La durée de rayonnement peut être de 5 à 60 min en fonction de la puissance de la lampe. Typiquement, cette durée est de 20 minutes à 5 cm de distance pour une puissance 6Watts.

> Traitement thermique

En règle générale, la température et la durée choisie dans le cadre de la présente invention pour un traitement thermique doivent permettre de conserver l'intégrité des nanofibres et d'éviter la fusion des nanofibres au cours de ce traitement.

Conformément à l'invention, le traitement thermique est effectué à une température de 20°C à 220°C, notamment de 20°C à 180°C, particulièrement à une température de 60°C à 160°C, plus particulièrement à une température de 120°C à 150°C.

La durée du traitement thermique dépend de la température appliquée lors de ce traitement. Typiquement, lorsque ce traitement est réalisé à 145°C, la durée de traitement est d'environ 30 à 60 minutes. Il peut atteindre plusieurs heures (typiquement de 5 à 10 heures) si les températures appliquées sont de l'ordre de 80°C à 120°C.

Lorsque la stabilisation est mise en œuvre par un traitement thermique, la solution de polymère contient, de préférence, un agent réticulant.

A titre d'exemple, un traitement thermique entre 120°C et 160°C entraine au sein de l'acide polyacrylique la formation d'anhydrides par déshydratation, permettant une réaction chimique avec un agent réticulant aminé, tel que le HMDA par exemple. De la même façon, lorsque la solution de synthèse comprend un calixarène portant des bras de réticulation présentant des fonctions amine, un traitement thermique à 140°C est favorable pour la stabilisation des nanofibres via la formation des anhydrides.

Un traitement thermique supérieur à 180°C peut entrainer la fusion des nanofibres.

Le choix de la méthode de stabilisation des nanofibres obtenues à partir d'une solution de synthèse dépend de ladite solution de synthèse.

Les nanofibres obtenues à partir d'une solution de synthèse sans agent réticulant sont réticulées par rayonnement VUV ou UV.

Lorsqu'une solution de synthèse comprend un agent réticulant, les nanofibres obtenues de ladite solution de synthèse peuvent être stabilisées par un traitement thermique ou par un rayonnement VUV, UV ou visible.

Lorsque la solution de synthèse comprend un calixarène qui ne porte pas de bras de réticulation et que cette solution ne comporte pas un autre agent réticulant, alors une stabilisation par rayonnement VUV ou UV est nécessaire.

Dans un mode de réalisation particulier, les nanofibres de l'invention sont susceptibles d'être obtenues par le procédé comprenant les étapes suivantes :

(a) l'obtention des nanofibres par électrospinning ou centrifugal spinning à partir d'une solution de synthèse, ladite solution comprenant un agent réticulant et un polymère initial hydrophile et hydrosoluble tel que décrit auparavant ayant une masse moléculaire de $1x10^4$ à $1,5x10^6$, notamment de $1x10^4$ à $5x10^{5,}$

(b) la stabilisation des nanofibres obtenues dans l'étape (a) par un traitement thermique pour obtenir des nanofibres insolubles, mais gonflables dans un effluent essentiellement aqueux.

Dans un mode de réalisation avantageux, les nanofibres insolubles de l'invention sont obtenues par traitement thermique des nanofibres, produites par électrospinning ou centrifugal spinning à partir d'une solution aqueuse comprenant de l'acide polyacrylique comme polymère initial et une diamine comme agent réticulant.

Plus avantageusement, les nanofibres de l'invention sont susceptibles d'être obtenues par le procédé comprenant les étapes suivantes :

(a) l'obtention des nanofibres par électrospinning ou centrifugal spinning à partir d'une solution de synthèse, ladite solution comprenant 0,2-4% en poids de la solution de synthèse d'hexaméthylènediamine comme agent réticulant et 20-25% en poids de la solution de synthèse d'acide polyacrylique ayant une masse moléculaire de $1,3x10^5$-

2,5x$10^5$ comme polymère initial,
(b) la stabilisation des nanofibres obtenues dans l'étape (a) par un traitement thermique, lesdites nanofibres insolubles mais gonflables dans un effluent essentiellement aqueux ayant un taux de réticulation compris entre 5 et 20%.

Dans un mode de réalisation particulièrement avantageux, l'invention concerne les nanofibres insolubles dans un effluent essentiellement aqueux, obtenues par traitement thermiques des nanofibres produites par électrospinning or centrifugal spinning à partir d'une solution de synthèse alcoolique acidifiée à pH2 et comprenant :

- l'acide polyacrylique ayant une masse moléculaire de 1x$10^4$ à 5x$10^5$, notamment de 1,3x$10^5$ à 2,5x$10^5$, comme polymère initial, et
- l'hexaméthylènediamine comme agent réticulant.

Dans un autre mode de réalisation particulièrement avantageux, l'invention concerne les nanofibres insolubles dans un effluent essentiellement aqueux, obtenues par traitement thermique des nanofibres produites par électrospinning ou centrifugal spinning à partir d'une solution de synthèse à base de différents solvants organiques miscibles tels que Ethanol/THF, acidifiée à pH2 et comprenant :

- l'acide polyacrylique ayant une masse moléculaire de 1x$10^4$ à 5x$10^5$, notamment de 1,3x$10^5$ à 2,5x$10^5$, comme polymère initial, et
- l'hexaméthylènediamine comme agent réticulant.
- un calixarène.

Un autre mode de réalisation avantageux de l'invention concerne les nanofibres insolubles dans un effluent essentiellement aqueux, obtenues par traitement thermique des nanofibres produites par électrospinning ou centrifugal spinning à partir d'une solution de synthèse aqueuse ou alcoolique comprenant :

- l'acide polyacrylique ayant une masse moléculaire de 1x$10^4$ à 5x$10^5$, notamment de 1,3x$10^5$ à 2,5x$10^5$, comme polymère initial, et
- un polyéthylène glycol ayant une masse moléculaire de 950 à 1050 ou un polyhydroxyéthyl méthacrylate ayant une masse moléculaire de 20 000 comme agent réticulant.

Un autre mode de réalisation avantageux de l'invention concerne les nanofibres insolubles dans un effluent essentiellement aqueux, obtenues par traitement thermique des nanofibres, produites par électrospinning ou centrifugal spinning à partir d'une solution de synthèse alcoolique comprenant :

- de la poly(4-vinylpyridine) ayant une masse moléculaire de 1x$10^4$ à 5x$10^5$ comme polymère initial, et
- du 1,4-dibromobutane ou du 1,4- diiodobutane comme agent réticulant.

Dans un autre mode de réalisation, les nanofibres insolubles dans un effluent essentiellement aqueux de l'invention sont susceptibles d'être obtenues par le procédé comprenant les étapes suivantes :

(a) l'obtention des nanofibres par électrospinning ou centrifugal spinning à partir d'une solution de synthèse d'un polymère initial hydrophile et hydrosoluble telle que décrite auparavant,
(b) la stabilisation des nanofibres obtenues dans l'étape (a) par radiation VUV ou UV ou par rayonnement visible pour obtenir des nanofibres insolubles mais gonflables dans un effluent essentiellement aqueux.

Un mode de réalisation plus particulier concerne les nanofibres insolubles de l'invention, susceptibles d'être obtenues par le procédé comprenant les étapes suivantes :

(a) l'obtention des nanofibres par électrospinning ou centrifugal spinning à partir d'une solution de synthèse alcoolique de poly(4-vinylpyridine) comme polymère initial, ladite poly(4-vinylpyridine) ayant une masse moléculaire de 1x$10^4$ à 5x$10^5$,
(b) la stabilisation des nanofibres obtenues dans l'étape (a) par radiation VUV ou UV ou par rayonnement visible.

Un autre mode de réalisation plus particulier concerne les nanofibres insolubles de l'invention, susceptibles d'être obtenues par le procédé comprenant les étapes suivantes :

(a) l'obtention des nanofibres par électrospinning ou centrifugal spinning à partir d'une solution de synthèse aqueuse

ou alcoolique d'acide polyacrylique avec une masse moléculaire de $1,3x10^5$- $2,5x10^5$ comme polymère initial,
(b) la stabilisation des nanofibres obtenues dans l'étape (a) par radiation VUV ou UV ou par rayonnement visible.

Un autre mode de réalisation plus particulier concerne les nanofibres insolubles de l'invention, susceptibles d'être obtenues par le procédé comprenant les étapes suivantes :

(a) l'obtention des nanofibres par électrospinning ou centrifugal spinning à partir d'une solution de synthèse alcoolique comprenant :

- le polyvinylpyrrolidone avec une masse moléculaire de $1,0x0^6$ comme polymère initial, et éventuellement
- une molécule cage de 5-30% en poids de polymère initial hydrophile et hydrosoluble,

(b) la stabilisation des nanofibres obtenues dans l'étape (a) par traitement thermiquement.

A titre d'exemple, le teneur de polyvinylpyrrolidone dans la solution de synthèse peut être 15% en poids de la solution de synthèse.
Le traitement thermique de ces nanofibres peut être effectué à 215°C pendant 2 heures.
Un autre mode de réalisation plus particulier concerne les nanofibres insolubles de l'invention, susceptibles d'être obtenues par le procédé comprenant les étapes suivantes :

(a) l'obtention des nanofibres par électrospinning ou centrifugal spinning à partir d'une solution de synthèse alcoolique comprenant :

- 15% en poids de la solution de synthèse de polyvinylpyrrolidone avec une masse moléculaire de $1,0x0^6$,
- 5% en poids de la solution de synthèse de polystyrène sulfonate avec une masse moléculaire de 75000,

(b) la stabilisation des nanofibres obtenues dans l'étape (a) par traitement thermiquement.

Le traitement thermique de ces nanofibres peut être effectué à 215°C pendant 2 heures.
Un autre mode de réalisation plus particulier concerne les nanofibres insolubles de l'invention, susceptibles d'être obtenues par le procédé comprenant les étapes suivantes :

(a) l'obtention des nanofibres par électrospinning ou centrifugal spinning à partir d'une solution de synthèse alcoolique comprenant :

- 15% en poids de la solution de synthèse de poly-4-vinylpyridine (P4VP) avec une masse moléculaire de 160000,
- 0,65% en poids de la solution de synthèse de dibromo-p-xylène ou 5-10 % en poids de la solution de synthèse de 1-4 dichlorobutane comme agent réticulant,

(b) la stabilisation des nanofibres obtenues dans l'étape (a) par traitement thermiquement.

Le traitement thermique de ces nanofibres peut être effectué à 150°C pendant 1 heure.
Un autre mode de réalisation plus particulier concerne les nanofibres insolubles de l'invention, susceptibles d'être obtenues par le procédé comprenant les étapes suivantes :

(a) l'obtention des nanofibres par électrospinning ou centrifugal spinning à partir d'une solution de synthèse aqueuse comprenant :

- 25% en poids de la solution de synthèse d'acide polyacrylique avec une masse moléculaire de $2,5x10^5$,
- 2,5% en poids de la solution de synthèse de poly(styrène sulfonate-co-acide maléique) avec une masse moléculaire de $2,0x10^{5,}$
- 17% en poids de la solution de synthèse d'hexaméthylènediamine comme agent réticulant

(b) la stabilisation des nanofibres obtenues dans l'étape (a) par traitement thermiquement.

Le traitement thermique de ces nanofibres peut être effectué à 160°C pendant 2 heures.
Un autre mode de réalisation plus particulier concerne les nanofibres insolubles de l'invention, susceptibles d'être obtenues par le procédé comprenant les étapes suivantes :

(a) l'obtention des nanofibres par électrospinning ou centrifugal spinning à partir d'une solution de synthèse aqueuse contenant 10% en poids de poly[(2-éthyldiméthylammonioéthyl méthacrylate éthyle sulfate)-co-(1-vinylpyrrolidone)] avec une masse moléculaire de $10^6$,

(b) la stabilisation des nanofibres obtenues dans l'étape (a) par traitement thermiquement.

Le traitement thermique de ces nanofibres peut être effectué à 200°C pendant 2 heures.

Conformément à l'invention, le diamètre d'une nanofibre insoluble de l'invention est de 50 nm à 10 μm, notamment de 100 nm à 5 μm, plus particulièrement de 100 nm à 1 μm, encore plus particulièrement de 100 nm à 300 nm.

Ce diamètre joue un rôle sur la vitesse de diffusion d'un effluent dans ladite nanofibre et donc sur l'efficacité de l'extraction.

La présente invention concerne également une membrane constituée par des nanofibres insolubles mais gonflables dans un solvant essentiellement aqueux telles que décrites auparavant.

Ladite membrane est notamment constituée par un même type de nanofibres insolubles mais gonflables de l'invention.

Dans un mode de réalisation particulier, l'invention concerne une membrane constituée par des nanofibres à base d'acide polyacrylique produites par électrospinning ou centrifugal spinning et stabilisées par rayonnement VUV ou UV ou par rayonnement visible, telles que décrites auparavant.

Dans un autre mode de réalisation particulier, l'invention concerne une membrane constituée par des nanofibres à base d'acide polyacrylique produites par électrospinning ou centrifugal spinning et stabilisées par traitement thermique à l'aide de l'hexaméthylènediamine comme agent réticulant, telles que décrites auparavant.

Dans un autre mode de réalisation particulier, l'invention concerne une membrane constituée par des nanofibres à base de la poly(4-vinylpyridine) par électrospinning ou centrifugal spinning et stabilisées par rayonnement VUV ou UV ou par rayonnement visible , telles que décrites auparavant.

Un avantage principal des nanofibres insolubles dans un effluent essentiellement aqueux de l'invention est leur capacité à capturer les métaux lourds, les terres rares ou les éléments radioactifs, grâce à leur surface spécifique très importante et éventuellement à la présence de molécules complexant.

Lorsque les nanofibres sont fabriquées sous forme d'une membrane, sa surface spécifique peut être supérieure à $15m^2/g$, plus importante que celle des résines échangeuses d'ions (figure 4).

Ces nanofibres sont donc plus performantes que les résines et capables de traiter des effluents industriels.

Un aspect de l'invention concerne l'utilisation des nanofibres insolubles mais gonflables dans un effluent essentiellement aqueux telles que décrites auparavant, pour traiter un effluent contenant des métaux, notamment les sels métalliques issus des métaux lourds, des terres rares, des métaux alcalins, alcalino-terreux, ou des actinides, dans leurs formes isotopiques stables ou instables.

Les métaux ciblés par la présente invention comprennent notamment le cuivre (Cu), le césium (Cs), le mercure (Hg), le chrome (Cr), le plomb (Pb), le zinc (Zn), l'uranium (U) et le plutonium (Pu).

Le terme « terres rares » se réfère à un groupe d'éléments chimiques constitué par le scandium (Sc), l'yttrium (Y), et les quinze lanthanides, à savoir le lanthane (La), le cérium (Ce), le praséodyme (Pr), le néodyme (Nd), le prométhium (Pm), le samarium (Sm), l'europium (Eu), le gadolinium (Gd), le terbium (Tb), le dysprosium (Dy), l'holmium (Ho), l'erbium (Er), le thulium (Tm), l'ytterbium (Yb) et le lutécium (Lu).

Le terme « actinide » se réfère à un groupe d'éléments chimiques constitué par le lawrencium (Lr), l'actinium (Ac), le thorium (Th), le protactinium (Pa), l'uranium (U), le neptunium (Np), le plutonium (Pu), l'américium (Am), le curium (Cm), le berkélium (Bk), le californium (Cf), l'einsteinium (Es), le fermium (Fm), le mendélévium (Md), le nobélium (No).

Le terme « élément radioactif » se réfère aux éléments chimiques radioactifs naturels ou produits de fission. Il peut s'agir de l'ensemble des métaux de la classification périodique qu'ils soient par exemple monovalent comme le césium, divalent comme le strontium ou trivalent comme les lanthanides.

Un mode de réalisation particulier de l'invention concerne l'utilisation des nanofibres insolubles de l'invention obtenues à partir d'une solution aqueuse d'acide polyacrylique ou de co-polymères pour traiter un effluent contenant le cuivre, notamment sous forme cationique $Cu^{2+}$.

A titre d'exemple, les nanofibres insolubles de l'invention obtenues à partir d'une solution aqueuse d'acide polyacrylique peuvent capturer le cuivre jusqu'à 280 mg/g. Cette capacité est de 50% supérieure aux meilleures résines connues dans l'art antérieur à base d'acide polyacrylique.

Un autre mode de réalisation particulier de l'invention concerne l'utilisation des nanofibres insolubles de l'invention obtenues à partir d'une solution de synthèse organique comprenant :

- l'acide polyacrylique ou ses dérivés anioniques, et
- un calixarène de formule I ou formule II ou un calixarène non réticulant tel que défini auparavant, pour traiter un effluent contenant du césium.

Avantageusement, les solvants dans ladite solution de synthèse sont l'éthanol et le THF.

Plus particulièrement, l'invention concerne l'utilisation de nanofibres insolubles obtenues à partir d'une solution de synthèse comprenant de l'acide polyacrylique et le calixarène (composé B) pour traiter un effluent contenant le césium.

Ledit calixarène peut être soit réticulé avec l'acide polyacrylique, soit simplement immobilisé, grâce à son hydrophobicité, dans la matrice de polymère.

Un autre mode de réalisation particulier de l'invention concerne l'utilisation des nanofibres insolubles de l'invention obtenues à partir d'une solution de synthèse aqueuse comprenant les dérivés cationiques de polystyrène pour traiter un effluent contenant de l'uranium, notamment sous forme anionique $UO^{2-}$.

L'invention a également pour objet la mise à disposition d'un procédé d'extraction dans un effluent des métaux, notamment les sels métalliques issus des métaux lourds, des terres rares, des métaux alcalins, des alcalino-terreux, ou des actinides, dans leurs formes isotopiques stables ou instables, ledit procédé comprenant les étapes suivantes :

(i) placer des nanofibres insolubles mais gonflables de l'invention, éventuellement sous forme de membrane, dans un effluent essentiellement aqueux telles que décrites auparavant pendant un temps suffisant ;
(ii) récupérer les métaux, notamment les sels métalliques issues des métaux lourds, des terres rares, des métaux alcalins, des alcalino-terreux, ou des actinides, dans leurs formes isotopiques stables ou instables complexés par desdites nanofibres en plaçant desdites nanofibres dans une solution de régénération.

Un autre avantage des nanofibres de la présente invention est que la régénération des nanofibres peut être mise en œuvre facilement et rapidement.

La régénération des nanofibres rend possible la récupération des métaux ou éléments capturés par les nanofibres.

La régénération des nanofibres et la récupération des métaux ou éléments capturés peut être réalisée par toute technique connue de l'homme du métier, notamment par changement de pH de la solution de régénération par rapport à celui de l'effluent.

Dans un mode de réalisation particulier, ladite solution de régénération est une solution acide.

Les groupes carboxylates ($-COO^-$) de l'acide polyacrylique (PAA) et les groupes pyridine sous forme neutre de la poly(4-vinylpyridine)(P4VP) sont les groupes fonctionnels pour complexer le cuivre. En revanche, les groupes carboxyliques (-COOH) de l'acide polyacrylique et les groupes pyridines acidifiés de la P4VP ne sont pas capables de complexer le cuivre.

En diminuant le pH de la solution de régénération, ces groupes fonctionnels passent respectivement aux formes non-fonctionnelles, ce qui permet la libération des métaux ou éléments complexés par ces groupes fonctionnels.

Lorsque ce sont des ions $Cu^{2+}$ qui sont complexés avec ces groupes fonctionnels, après mise en contact avec un effluent contenant ces ions, ils peuvent être récupérés des nanofibres insolubles par application d'une solution de régénération acide.

L'invention concerne en particulier un procédé d'extraction du césium contenu dans un effluent, comprenant les étapes suivantes :

(i) placer des nanofibres insolubles de l'invention, éventuellement sous forme de membranes, obtenues à partir d'une solution de synthèse organique contenant de l'acide polyacrylique et le calixarène composé B, telles que décrites auparavant, dans un effluent pendant un temps suffisant ;
(ii) récupérer le césium complexé par desdits nanofibres en plaçant desdits nanofibres dans une solution de régénération acide.

Avantageusement, la régénération de ladite membrane a eu lieu dans une solution de régénération de pH1.

La présente invention est illustrée davantage par les figures et les exemples ci-après.

Figure la : Schéma du dispositif d'électrospinning, adapté de Greiner et Wendorff, Angew. Chem. Int. Ed. 2007, 46, 5670 - 5703.
Figure 1b : Schéma du dispositif de centrifugal spinning, adapté de C. J. Luo et al. Chem. Soc. Rev., 2012, 41, 4708-4735.
Figure 2 : Image MEB de nanofibres d'acide polyacrylique (PAA) avec 1% en poids d'hexaméthylènediamine (HMDA) après un traitement thermique à 145°C pendant 35 minutes.
Figures 3a, 3b, 3c, 3d : Images MEB (microscopie électronique à balayage) des nanofibres de PAA après 1min (3a), 2 min (3b), 3min (3c), ou 5min (3d) de traitement VUV.
Figure 4 : Vision schématique du traitement d'effluents avec des résines échangeuses d'ions ou des nanofibres.
Figures 5a, 5b et 5c: Comparaison de performance entre des nonofibres de PAA de l'invention et les résines échangeuses d'ions Amberlite IRC 748I resin de SUPELCO. La figure 5a est relative à l'étude cinétique de capture

des ions Cuivre (II) par des nanofibres ou par les résines. La figure 5b est relative à l'étude comparative pour un isotherme d'adsorption pour une solution chargée en ions Cuivre (II). La figure 5c est relative à l'étude comparative pour un isotherme d'adsorption pour une solution chargée en ions Strontium (II).

Figures 5d et 5e montrent les résultats des études de percement des nanofibres de l'invention de PAA, réalisées avec des ions Cuivre (II) en milieux fortement concentré (figure 5d) et faiblement concentré (figure 5e).

Figure 5f montre le résultat de l'étude de régénérabilité des nanofibres de l'invention de PAA.

Figures 6a et 6b respectivement montrent les images MEB de nanofibres de PAA obtenues par électrospinning (figure 6a) et par centrifugal spinning (figure 6b) avant réticulation thermique.

Figures 7a et 7b montrent respectivement les images MEB de nanofibres de PAA obtenues par électrospinning (figure 7a) et par centrifugal spinning (figure 7b) après réticulation thermique.

Figures 8a et 8b montrent respectivement les images MEB de nanofibres de PAA obtenues par électrospinning (figure 8a) et par centrifugal spinning (figure 8b) après réticulation thermique et après contact avec de l'eau.

**Exemples**

**Matériels et méthodes**

• Electrospinning

L'électrospinning est effectué à l'aide d'un dispositif traditionnel (voir le schéma en Figure la adapté de Greiner et Wendorff), une solution de polymère est injectée dans une aiguille d'un diamètre interne variant entre 0,1 et 1mm. La seringue est placée dans le pousse seringue qui est programmé pour le débit choisi (en mL/h). L'aiguille est connectée à un générateur de haute tension ce qui lui donne en plus un rôle d'électrode. La contre électrode (reliée à la masse) se trouve à une distance variant entre 5 et 25 cm. La tension appliquée entre ces deux électrodes peut varier entre 0 et 100 kV suivant les alimentations utilisées. En utilisant ces très hautes tensions, on travaille avec des courants très faibles, de quelques centaines de nA à quelques μA.

Les nanofibres produites par électrospinning sont collectées sur un collecteur relié à la contre électrode et l'aiguille à la haute tension.

La fermeture de la porte de l'enceinte permet l'allumage de l'alimentation haute tension. Sur l'alimentation, un premier potentiostat permet de limiter le courant et le second la tension appliquée. Par sécurité, le potentiostat du courant est fixé à 25μA (courant maximum) et on fait varier le second potentiostat pour atteindre la tension souhaitée.

• Centrifugal spinning

Le centrifugal spinning est effectué à l'aide d'un dispositif classique (voir schéma en Figure 1b adapté de C. J. Luo et al.) tel que le forcespinning® de type Cyclone L 1000 M/D de la société FIBERIO dont la productivité peut atteindre 200g/heure. La vitesse de rotation de la filière de ce dispositif est entre 2000 et 5000 tour/min.

• Infra-Rouge (IR)

Les analyses infrarouges ont été menées sur un appareil FTIR Bruker Vertex 70 dans la gamme 4000-600 $cm^{-1}$. Le spectromètre a été utilisé en mode ATR (Attenuated Totale Reflectance) avec un cristal de type diamant.

En arrivant sur le diamant, le faisceau IR incident produit une onde évanescente qui va être absorbée ou altérée par l'échantillon (jusqu'à 3μm) puis retournée dans le faisceau IR. Le faisceau IR de sortie est analysé par un spectromètre DTGS (Deutérium TriGlycide Sulfate). La résolution est de l'ordre de $2cm^{-1}$ et 64 scans sont effectués pour obtenir un bon rapport signal/bruit.

• Microscopie Electronique à Balayage (MEB)

Les images de Microscopie Electronique à Balayage ont été obtenues sur un JEOL JSM-5510LV. Toutes les analyses ont été réalisées à une tension d'accélération faible (entre 2 et 4 kV) car les fibres étudiées sont des isolants et le risque d'endommagement est élevé pour ce type de matériau. La distance de travail est fixée à 8 mm et l'acquisition se fait en mode SEI. Un filament de tungstène est utilisé comme canon à électron.

Un MEB Zeiss Ultra 55 comprenant un canon à émission de champ a permis de réaliser des images avec un contraste amélioré et un grossissement plus important.

Le traitement des images a été réalisé avec le logiciel OpenSource Image J. La détermination du diamètre des nanofibres a été réalisée par une étude statistique sur un minimum de 100 fibres.

• Spectrophotomètre Cuivre

Pour la détection du cuivre et le calcul de la concentration en $Cu^{2+}$, un spectrophotomètre Hanna instruments a été utilisé. On utilise le bicinchoninate comme réactif colorimétrique qui émet à 562 nm lorsqu'il est complexé au cuivre. Le dispositif permet de détecter des concentrations allant de 0 à 5 mg/l (±0,02).

• Spectroscopie d'Absorption Atomique (AAS)

La spectroscopie d'absorption atomique a été réalisée avec un modèle de chez Thermo Scientific : iCE 3000 Series. L'AAS est utilisée pour déterminer la concentration en césium dans une solution synthétique. On utilise donc une lampe césium en mode émission pour avoir une bonne précision.

• Mesure de la capacité à capturer le cuivre

La membrane stabilisée est plongée dans un bécher contenant un volume donné de solutions synthétiques. La membrane stabilisée est mise en contact avec une solution diluée de soude ($NaOH_{aq}$) (pH ≈ 9-10) pendant 5 minutes pour dégrader la forme anhydride en cas de traitement thermique et avoir la forme carboxylate puis avec la solution synthétique de cuivre pendant 120 minutes (sauf si mentionné autrement). Avant chaque changement de solution, la membrane est séchée sous vide pendant 30 minutes.

Les concentrations initiales et finales en cuivre des solutions sont mesurées avec le spectrophotomètre pour cuivre. On fait le zéro avec l'échantillon sans agent chélatant. Dans une cuve, on introduit un sachet de bicinchoninate puis la solution à analyser (solution diluée si dépassant les 5mg/L) et on lance la détection.

La capacité du matériau à capturer le cuivre (mg/g) (X) est déterminée par la formule suivante :

$$X = \frac{C_i - C_f \times V}{W_{membrane}}$$

dans laquelle $C_i$ et $C_f$ correspondent respectivement à la concentration massique initiale et à la concentration finale en cuivre (en mg/L), V est le volume de la solution modèle (en L), $W_{membrane}$ est la masse de la membrane (en g).

• Mesure de la capacité à capturer le césium

La méthode décrite ci-dessus pour mesurer la capacité de capture du cuivre est applicable pour mesurer la capacité d'un matériau à capturer le césium. La membrane stabilisée est mise en contact avec la solution synthétique de l'élément à étudier pendant 30 minutes. Les concentrations initiales et finales en Cs des solutions sont mesurées avec la spectrométrie d'absorption atomique. La formule utilisée pour calculer la capacité pour le cuivre est valable pour le Cs.

**Exemple 1. Extraction de cuivre par des nanofibres insolubles de PAA produits par électrospinning et stabilisées par un agent réticulant**

1) Préparation des solutions de polymère

Deux types d'acide polyacrylique (PAA) ont été utilisés, leurs caractéristiques sont les suivantes :

- PAA Fluka : PAA pur (analytical standard), Mw = 130 000 $g.mol^{-1}$, poudre blanche
- PAA 35% $H_2O$ : PAA dilué à 35% dans H2O, Mw = 250 000 $g.mol^{-1}$, liquide incolore visqueux.

Le $pK_A$ du PAA est de 4,25.

L'acide polyacrylique (PAA) est dilué à 20-25% en poids dans l'eau désionisée pour obtenir une solution visqueuse. L'hexaméthylène diamine (HMDA) comme agent réticulant est ajoutée à 15 % en poids par rapport à la masse de PAA.

2) Fabrication des nanofibres par électrospinning

Cette solution est injectée dans un dispositif d'électrospinning pour fabriquer les nanofibres solubles. La tension appliquée est située entre 15 et 20 kV à une distance entre la solution et le collecteur de 10-20 cm. Dans ces conditions,

des nanofibres de PAA de 100-130 nm de diamètres sont obtenues. Les nanofibres obtenues ont une apparence lisse et bien définies. L'ensemble des nanofibres forment une membrane blanche de 5 à 10 cm de diamètre et de 30 à 150 mg.

3) Stabilisation des membranes par traitement thermique

Un traitement thermique est effectué à 130-145 °C pendant 25-50 min. Les membranes après la stabilisation sont stables en milieux aqueux pendant plusieurs mois.

On constate un gonflement de la membrane lorsque celle-ci est plongée dans l'eau. Ce phénomène atteste du caractère hygroscopique du PAA ce qui est un avantage considérable pour la capture des éléments dissous. Le traitement thermique a un impact sur la morphologie des nanofibres (figure 2).

4) Extraction de $Cu^{2+}$

Des solutions synthétiques de $Cu^{2+}$ de 5-500 mg/L sont préparées à partir de $CuSO_4.5H_2O$ dans l'eau désionisée. Les solutions de $CuSO_4$ étant légèrement acides, il est nécessaire d'ajuster le pH à 6 avec une solution aqueuse d'hydroxyde de sodium.

La membrane de nanofibres de PAA est plongée dans la solution de $Cu^{2+}$ (5-500mg/L) et se colore en moins d'une minute en bleu, ce qui prouve que le cuivre s'est inséré dans les nanofibres de PAA. Après 2h d'immersion dans la solution, la membrane est saturée. On mesure la concentration finale en $Cu^{2+}$ de ladite solution avec le spectrophotomètre Cuivre et obtient une capacité de 280mg/g bien supérieure à celles obtenues avec les nanofibres décrites dans l'art antérieur.

5) Régénération des membranes

Un traitement en milieu acide (HCl 1M) décolore instantanément la membrane qui retrouve sa coloration blanche. La régénération est efficace à 100%.

Il est possible d'effectuer plusieurs cycles de capture/relargage du cuivre.

**Exemple 2. Extraction de cuivre par des nanofibres insolubles de PAA produites par électrospinning en milieu alcoolique et stabilisées par un agent réticulant**

1) Préparation de la solution de synthèse

- PAA Fluka : PAA pur (analytical standard), Mw = 130 000 g.mol-1, poudre blanche
- HMDA 15 %
- Acide nitrique HNO3 concentré

L'acide polyacrylique, de masse molaire (MW) allant de 130 000 à est dilué à 10% en poids dans l'éthanol. Un montage à reflux permet de faciliter la dissolution. La solution obtenue est incolore et visqueuse. L'acide nitrique est ajouté pour obtenir un pH de 2. L'hexaméthylène diamine (HMDA) comme agent réticulant est ajoutée à 15 % en poids par rapport à la masse de PAA.

2) Fabrication des nanofibres par électrospinning

Cette solution est injectée dans un dispositif d'électrospinning pour fabriquer les nanofibres. La tension appliquée est située entre 15 et 20 kV à une distance entre la solution et le collecteur de 10-20 cm. Dans ces conditions, des nanofibres de PAA de 150 nm de diamètres sont obtenues. Les nanofibres obtenues ont une apparence lisse et bien définies. L'ensemble des nanofibres forment une membrane blanche de 5 à 10 cm de diamètre et de 30 à 150 mg.

3) Stabilisation des membranes par traitement thermique

Un traitement thermique est effectué à 130-145 °C pendant 25-50 min. Les membranes après la stabilisation sont stables en milieux aqueux pendant plusieurs mois.

4) Extraction de $Cu^{2+}$

Des solutions synthétiques de $Cu^{2+}$ de 5-500 mg/L sont préparées à partir de $CuSO_4.5H_2O$ dans l'eau désionisée. Les solutions de $CuSO_4$ étant légèrement acides, il est nécessaire d'ajuster le pH à 6 avec une solution aqueuse d'hydroxyde de sodium.

La membrane de nanofibres de PAA est plongée dans la solution de Cu2+ (5-500mg/L) et se colore en moins d'une minute en bleu, ce qui prouve que le cuivre s'est inséré dans les nanofibres de PAA. Après 2h d'immersion dans la solution, la membrane est saturée. On mesure la concentration finale en $Cu^{2+}$ de ladite solution avec le spectrophotomètre Cuivre et obtient une capacité de 230 mg/g.

5) Régénération des membranes

Un traitement en milieu acide (HCl 1M) décolore instantanément la membrane qui retrouve sa coloration blanche. La régénération est efficace à 100%.

Il est possible d'effectuer plusieurs cycles de capture/relargage du cuivre.

**Exemple 3: Extraction de cuivre par des nanofibres insolubles de PAA produites par électrospinning et stabilisées par rayonnement VUV**

La fabrication des nanofibres solubles de PAA est la même que celle décrite dans l'exemple 1.

La stabilisation de la membrane est effectuée par rayonnement VUV.

La membrane de nanofibres à stabiliser est placée dans un dispositif d'irradiation VUV (Vacuum Ultra Violet) à 4-8cm de distance de la source.

Afin d'éviter la formation d'ozone, un balayage à l'azote ($N_2$) est effectué pendant 15 minutes.

L'irradiation s'effectue à 172 nm sous balayage de $N_2$ pendant une durée variant entre 1 et 5 minutes.

Ce traitement physique permet de ne pas altérer la morphologie des nanofibres tout en permettant une réticulation et donc une stabilisation dans le milieu d'utilisation (eau, alcools, etc...).

Les analyses spectroscopiques(IR) et structurelles (MEB) donnent des résultats similaires avant et après traitement VUV (pour des temps variant de 1 à 5 minutes). Les figures 3a, 3b, 3c, 3d montrent respectivement les nanofibres après 1, 2, 3 et 5 minutes de traitement VUV. Il n'y a pas de changement de morphologie notable (forme, diamètre) observé.

La méthode d'extraction du cuivre est la même que celle décrite dans l'exemple 1. La performance d'une telle membrane pour capturer le cuivre est de 25mg/g.

La régénération de la membrane est mise en œuvre selon la même méthode que celle décrite dans l'exemple 1 et atteint aussi les 100% d'efficacité.

**Exemple 4 : Extraction de traces de césium par des nanofibres de PAA incorporant, par imprégnation par solvant, des calixarènes sélectifs du césium**

1) Préparation des solutions mixtes polymère - calixarène

a) Préparation de la solution de polymère

L'acide polyacrylique, de masse molaire (Mw) allant de 130 000 à 250 000 g/mol est dilué à 10% en poids dans l'éthanol. Un montage à reflux permet de faciliter la dissolution. La solution obtenue est incolore et visqueuse.

b) Synthèse et traitement du calixarène

Le calixarène utilisé est le composé B décrit dans la demande WO 2013/124831.

Le calixarène pur est ensuite dissous dans du tétrahydrofurane (THF).

c) Mélanges PAA - calixarène

Diverses solutions peuvent être préparées à partir de la solution de PAA dans l'éthanol et de calixarène dans le THF. En modifiant le mélange on fait varier la proportion de calixarène par rapport au PAA. On peut ainsi préparer des solutions ayant comme proportion relative de calixarène de 10 à 70% en poids par rapport au PAA.

2) Fabrication des nanofibres par électrospinning

Ces solutions sont injectées respectivement dans un dispositif d'électrospinning pour fabriquer les nanofibres solubles. La tension appliquée est comprise entre 15 et 20 kV à une distance entre la solution et le collecteur de 10-20 cm. Dans ces conditions, des nanofibres de PAA de 200-300 nm de diamètres sont obtenues. Les nanofibres obtenues ont une apparence lisse et elles sont bien définies. L'ensemble des nanofibres forment une membrane blanche de 5 à 10 cm de diamètre et de 30 à 150 mg.

3) Stabilisation des membranes par rayonnement VUV

La membrane obtenue est placée dans un dispositif d'irradiation VUV (Vacuum Ultra Violet) à 4-8 cm de distance avec la source. Afin d'éviter la formation d'ozone, un balayage à l'azote ($N_2$) est effectué pendant 15 minutes.
L'irradiation s'effectue sous balayage de $N_2$ pendant une durée variant entre 1 et 5 minutes.
Ce traitement physique permet de ne pas altérer la morphologie des nanofibres tout en permettant une réticulation et donc une stabilisation en milieu d'utilisation (eau, alcools, etc...).

4) Extraction de traces de césium dans un milieu contenant des ions interférents

Les milieux à traiter sont très faiblement concentrés en césium dans de l'eau de mer (contenant des ions $Na^+$) ce qui nécessite l'utilisation d'un calixarène sélectif pour le césium.
Pour effectuer les tests d'extraction, la solution modèle utilisée contient des ions $Na^+$ à $10^{-1}$ M et des ions $Cs^+$ à $10^{-4}$ M.
La membrane de nanofibres de PAA contenant des calixarènes est introduite dans un volume de cette solution de sélectivité. Le temps d'extraction est généralement de 30 minutes.
Les concentrations initiales et finales en césium sont mesurées par un spectromètre d'absorption atomique tel que décrit dans la partie « Matériels et méthodes ». On mesure un abaissement de 95% de la concentration en césium.
A titre comparatif, une membrane composée de nanofibres de PAA (non additivées de calixarène) ne permet qu'un abaissement de 6% en césium.

5) Régénération des membranes par traitement acide

Un traitement des membranes contenant des calixarènes ayant complexés du césium par une solution aqueuse d'acide HCl à 5M permet de libérer la totalité du césium piégé.

**Exemple 5 : Etude des performances de nanofibres insolubles de PAA**

5.1/ Etude cinétique de capture des ions Cuivre (II)

Une étude cinétique a été réalisée en comparatif avec la résine échangeuse d'ions Amberlite™ IRC 748I.
La même solution de sel de cuivre à 2 mg/l est placée respectivement dans deux piluliers de même contenance. Le volume de la solution est de 50 ml. 250 ml de solution de sel de cuivre sont préparée par introduction dans une fiole jaugée de 250 ml de 157,5 mg de $CuSO_4$ et de l'eau distillée jusqu'au trait de jauge.
On place respectivement dans ces piluliers 127 mg de matériaux sorbant, à savoir la résine échangeuse d'ions (Amberlite IRC 748I resin de SUPELCO) et les membranes de la présente invention produites à partir d'une solution de synthèse initiale contenant 25% d'acide polyacrylique (PAA ; masse moléculaire $2{,}5x10^5$) en poids de la solution de synthèse et 15% d'héxaméthylènediamine en poids de PAA en tant qu'agent réticulant.
La résine Amberlite™ IRC 748I de SUPELCO est conçue pour capter les métaux lourds divalents comme le cuivre, le cobalt, le nickel ou le zinc avec des groupements dicarboxyliques aminés.
Dans les deux matériaux, ce sont les groupements carboxyliques qui captent les sels métalliques.
Une agitation magnétique modérée de 10 tours par seconde est immédiatement mise en place après la mise en solution des matériaux sorbants.
1 ml de la solution de cuivre est prélevé respectivement à 2, 5, 20, 50, 80 et 120 minutes, à l'aide d'une micropipette. Les échantillons sont analysés à l'absorption atomique.
Les paramètres de réglages de l'appareil (ICE 3000 de Thermo Scientific) pour l'analyse sont les suivants :

- Mode de mesure : absorption
- Flamme : air-acétylène
- Hauteur du brûleur : 7 mm

- Débit : 1,1 L/min.

Les résultats d'analyses sont donnés dans la figure 5a.

Les résultats montrent très clairement que les performances des nanofibres sont supérieures aux résines échangeuses d'ions (REI). Dès 2 minutes après la mise en contact de la solution de Cu avec les matériaux sorbant, les capacités de capture des nanofibres de l'invention sont très significativement supérieures à celles mesurées avec les REI. Ces résultats montrent à l'évidence qu'il est beaucoup plus rapide d'imprégner totalement une nanofibre de 0,3$\mu$m de diamètre qu'une bille de résine de 500 $\mu$m de diamètre, malgré tous les efforts réalisés par les fabricants des REI en vue d'améliorer la circulation du liquide à l'intérieur des billes.

Ces résultats peuvent être expliqués par l'équation de la diffusion donnée ci-dessous :

$$\tau = l^2/Ds,$$

dans laquelle $\tau$ représente le temps de diffusion, I représente la dimension des matériaux et Ds est un coefficient de diffusion.

La cinétique de capture par les billes de REI est limitée par la cinétique de diffusion du liquide au sein des billes (Ds), alors que la cinétique de capture par les nanofibres de l'invention est pilotée par la distance à parcourir (I). Compte tenu des dimensions des nanofibres, cette distance est très faible et il y correspond donc des temps de diffusion courts.

Compte tenu des capacités de capture avantageuses des nanofibres de l'invention par rapport aux REI, il est donc également possible de réduire, avec nos matériaux sorbant, les charges de matériaux dans une colonne pour une même efficacité.

5.2/ Isotherme d'adsorption pour une solution chargée en ion Cuivre (II)

Afin de déterminer les propriétés des nanofibres de PAA décrites dans l'exemple 5.1, un isotherme d'adsorption a été réalisé pour les ions Cuivre (II). Les conditions opératoires sont les suivantes :

- pH :3,8-4,6
- température d'adsorption : 20°C
- volume du lit: 2 mL
- hauteur de colonne de résine : environ 2,7 cm.

La capacité maximale ($Q_{max}$) est déterminée à 208 mg de Cuivre (II)/g de nanofibres de l'invention. À titre de comparaison et dans les mêmes conditions, la résine échangeuse d'ions AMBERLITE™ IRC748I, spécialiste de la capture des métaux, possède un $Q_{max}$ de 79 mg de Cuivre (II)/g de résine. Les nanofibres selon l'invention offrent donc des performances de capture plus élevées (figure 5b).

Une autre étude montre que la présence d'un sel de fond (NaCl à 0,1 mol/L) ne modifie pas les propriétés d'adsorption du matériau.

5.3/ Isotherme d'adsorption pour une solution chargée en ions Strontium (II)

L'ion Strontium (II) peut être capté par les nanofibres de l'invention décrites dans l'exemple 5.1. D'après l'isotherme d'absorption obtenu, la capacité de charge maximale ($Q_{max}$) atteinte est de 244 mg de Strontium (II)/g pour les nanofibres de l'invention, alors que, dans les mêmes conditions opératoires, la résine échangeuse d'ions AMBERLITE™ IRC748I possède un $Q_{max}$ de 38 mg de Strontium (II)/g de résine (figure 5c).

Les conditions opératoires sont les suivantes :

- pH : 5
- température d'adsorption : 20°C
- volume du lit : 1,9 mL
- hauteur de colonne : 1,5 cm.

5.4/ Etude du percement des ions Cuivre (II)

Les études de percement des nanofibres de PAA décrites dans l'exemple 5.1 sont réalisées avec des ions Cuivre (II) en milieux fortement concentré (1 g/L) et faiblement concentré (2 mg/L). Les résultats (figures 5d et 5e) montrent que les nanofibres de l'invention respecte les normes de la législation en vigueur en matière de rejet avec des

valeurs avant percement largement inférieures à 0,1 mg/L alors que les normes préconisent des valeurs limites de concentration en ions Cuivre (II) entre 0,5 et 2 mg/L(Circulaire DGS/SD 7 A n° 2004-45 du 5 février 2004 relative au contrôle des paramètres Plomb, Cuivre et Nickel dans les eaux destinées à la consommation humaine).

Les conditions opératoires pour l'étude en milieu fortement concentré en ions Cuivre (II) sont les suivantes :

- pH :4,6
- concentration en ions Cuivre (II)= 1,0 g/L
- température : 20°C
- volume du lit : 2,12 mL
- hauteur de colonne de résine : 2,7 cm.

Les conditions opératoires pour l'étude en milieu faiblement concentré en ions Cuivre (II) sont les suivantes :

- concentration en ions Cuivre (II)=2,0 mg/L
- température : 20°C
- volume du lit : 2,30 mL
- hauteur de colonne de résine : 2,7 cm.

5.5/ Capacité de charge en présence d'interférents

En fonction de l'effluent, différents interférents peuvent perturber l'étape d'adsorption des ions Cuivre (II) par les nanofibres décrite dans l'exemple 5.1. Des proportions en ions Sodium (I) ($Na^+$) et Calcium (II) ($Ca^{2+}$) ont été testées afin de déterminer la capacité de charge ($Q_e$) des nanofibres de l'invention en milieu interféré (tableau 1).

Tableau 1

| *Ion métallique* | *Interférent* | *Ratio* | *Capacité de charge $Q_e$ (mg/g)* |
|---|---|---|---|
| $Cu^{2+}$ | - | - | 169 |
| $Cu^{2+}$ | $Na^+$ | $Cu^{2+}/Na^+$ 1:10 | 169 |
| $Cu^{2+}$ | $Na^+$ | $Cu^{2+}/Na^+$ 1:500 | 146 |
| $Cu^{2+}$ | $Ca^{2+}$ | $Cu^{2+}/Ca^{2+}$ 1:1 | 158 |
| $Cu^{2+}$ | $Ca^{2+}$ | $Cu^{2+}/Ca^{2+}$ 1:100 | 70 |

Les conditions opératoires sont les suivantes :

- concentration initiale en ions Cuivre (II): 0,7 g/L
- température d'adsorption : 20°C
- volume du lit: 2 mL
- hauteur de colonne: 2,7 cm.

5.6/ Capacité de charge de différents ions métalliques

La capacité de charge ($Q_e$) de plusieurs ions métalliques a été déterminée avec la sélectivité suivante (dépendant des conditions de concentration, pH, de la présence d'interférents, etc.) :$Ca^{2+} < Cr^{3+} < Eu^{3+} < Fe^{2+} < Zn^{2+} < Ni^{2+} < Co^{2+} < Cd^{2+} < Cu^{2+} < Pb^{2+} < Mg^{2+} < Sr^{2+}$.

Les conditions opératoires sont les suivantes :

- concentration initiale en ions métalliques: environ 1g/L (20g/L pour $Eu^{3+}$)
- température d'adsorption : 20°C
- volume du lit : 2 mL
- hauteur de colonne : 2,7 cm.

Les résultats sont donnés dans le tableau 2 ci-après.

Tableau 2

| v | *pH* | *Capacité de charge $Q_e$ (mg/g)* |
|---|---|---|
| $Ca^{2+}$ | 5,0 | 80 |
| $Cd^{2+}$ | 5,0 | 186 |
| $Co^{2+}$ | 5,0 | 183 |
| $Cr^{3+}$ | 4,0 | 83 |
| $Cu^{2+}$ | 5,0 | 188 |
| $Eu^{3+}$ * | - | 105 |
| $Fe^{2+}$ | 4,0 | 121 |
| $Mg^{2+}$ | 5,5 | 215 |
| $Ni^{2+}$ | 5,0 | 147 |
| $Pb^{2+}$ | 4,0 | 195 |
| $Sr^{2+}$ | 5,0 | 254 |
| $Zn^{2+}$ | 5,0 | 124 |

5.7/ Méthode de régénération des nanofibres de l'invention

L'utilisation de 2 à 4 volumes du lit d'une solution d'acide chlorhydrique à 3,1% (correspond à 1 mol/L) permet de régénérer les nanofibres de PAA décrites dans l'exemple 5.1 (90-100%). Plusieurs cycles de saturations/régénérations ont été réalisés afin de montrer le maintien des performances du matériau (figure 5f).
Les conditions opératoires sont les suivantes :

- pH: 4,6
- concentration en ions Cuivre (II): 1g/L
- température d'adsorption : 20°C
- volume du lit : 2,12 mL
- hauteur de colonne : 2,7 cm.

**Exemple 6 : Etude comparative de nanofibres obtenues par électrospinning ou par centrifugal spinning**

La solution de synthèse pour produire des nanofibres par électrospinning ou centrifugal spinning est une solution à pH=3,7 contenant 25% d'acide polyacrylique (PAA ; masse moléculaire $2,5x10^5$) en poids de la solution de synthèse et 15% d'héxaméthylènediamine en poids de PAA en tant qu'agent réticulant.
Les nanofibres sont produites respectivement par la technique d'électrospinning et la technique de centrifugal spinning selon les méthodes décrites dans la partie « Matériels et méthodes ».
Les deux types de fibres produites sont réticulés thermiquement par chauffage à 145°C pendant 25 minutes. Les résultats comparatifs des deux types de nanofibres obtenues par électrospinning et par centrifugal spinning sont illustrés dans les figures 6a, 6b, 7a, 7b, 8a et 8b.
Les résultats montrent que les deux types de nanofibres ont des structures similaires et se comportent de la même manière au contact de l'eau.
Par ailleurs, une analyse infrarouge sur ces deux types de nanofibres confirme que les deux matériaux sont identiques d'un point de vue chimique.

**Exemple 7: Extraction de cuivre par des nanofibres insolubles de PAA produites par centrifugal spinning et stabilisées par traitement thermique**

Les nanofibres PAA décrites dans l'exemple 6 et produites par centrifugal spinning sont utilisées pour extraire le $Cu^{2+}$ d'une solution aqueuse.
Une solution synthétique de $Cu^{2+}$ à 2,16 mg/L a été préparée à partir de CuSO4.5H2O dans l'eau désionisée.
0,129 g de nanofibres de PAA obtenues par centrifugal spinning selon la méthode décrite précédemment sont mises en contact avec 50mL de la solution de $Cu^{2+}$. Après deux heures, la concentration en $Cu^{2+}$ de la solution est de 0,27 mg/L. C'est-à-dire 87% d'abaissement de concentration par une simple mise en contact.
En comparaison, la même quantité de nanofibres de PAA obtenues par électrospinning est également mise

en contact pendant 2 heures avec 50mL de la solution de $Cu^{2+}$. La concentration en en $Cu^{2+}$ après l'extraction est de 0,23 mg/L. Ces résultats montrent que la performance des nanofibres obtenues par centrifugal spinning est équivalente à celle des nanofibres obtenue par électrospinning.

La même expérience a été faite avec les résines échangeuses d'ions, après 2 heures de contact, la concentration d'équilibre est de 1,04 mg/L.

Dans une autre expérience comparative, une solution synthétique de $Cu^{2+}$ à 5,2 mg/L a été préparée à partir de CuSO4.5H2O dans l'eau désionisée.

0,112 g de nanofibres de PAA obtenues par centrifugal spinning sont mises en contact avec 50mL de la solution de $Cu^{2+}$. Après deux heures, la concentration en $Cu^{2+}$ de la solution est de 0,69 mg/L, soit également un abaissement de la concentration de l'ordre de 87%.

La même expérience a été faite avec 0,1036 g des nanofibres de polyacrylonitrile obtenues par centrifugal spinning. Après 2 heures de contact, la concentration en $Cu^{2+}$ de la solution est de 4,78 mg/L, soit un abaissement de la concentration d'à peine de 8%.

Ces résultats comparatifs montrent que seule l'utilisation d'un polymère initial hydrophile et hydrosoluble permet d'atteindre un abaissement souhaité de la concentration en $Cu^{2+}$.

**Exemple 8 : Étude relative au choix des masses moléculaires pour optimiser la stabilisation des nanofibres de PAA.**

Deux sources de polymères sont utilisées. Une source de PAA de masse moléculaire de 250 000 (Sigma Aldrich 416002 - 35 wt. % in H2O) et une source de polymère de PAA de 2 000 (Sigma Aldrich 535931 - 50 wt. % in H2O).

Ces deux sources de polymère sont utilisées pour faire une solution à 25% de PAA en masse totale et 15% d'héxaméthylènediamine en poids de PAA en tant qu'agent réticulant.

Afin d'évaluer la relation entre la masse moléculaire du PAA et le taux de réticulation deux films minces de PAA sont faits sur des lames de verre dorées. La solution de PAA de masse 2000 ne permet pas de produire des fibres.

Pour ces deux films un traitement thermique à 200°C pendant 20 min est fait. Ces films sont laissés à refroidir naturellement puis plongés pendant une heure dans une solution d'eau à pH entre 8 et 9 par ajout de soude. Ces solutions basiques sont très solubilisantes pour le PAA.

Après rinçage à l'eau distillée et à l'éthanol seul le film de PAA de masse 250 000 est toujours présent sur la surface. En revanche, le film de PAA de masse 2 000 n'est plus visible, car il est dissout.

Cet exemple met en évidence que l'efficacité de la réticulation pour un taux donné d'agent réticulant est très variée. Un polymère ayant une masse moléculaire relativement élevée permet d'avoir une meilleure efficacité de réticulation.

## Revendications

**1.** Nanofibres insolubles et gonflables dans un effluent essentiellement aqueux, dont le diamètre est de 50 nm à 10 μm, notamment de 100 nm à 5 μm, plus particulièrement de 100 nm à 1 μm, encore plus particulièrement de 100 à 300 nm, susceptibles d'être obtenues par le procédé comprenant les étapes suivantes :

(a) l'obtention des nanofibres par électrospinning ou centrifugal spinning à partir d'une solution de synthèse, ladite solution de synthèse comprenant :

(i) au moins un polymère initial hydrophile et hydrosoluble choisi dans le groupe comprenant :

- l'acide polyacrylique ou les copolymères de l'acide polyacrylique,
- les dérivés anioniques du polystyrène, tels que le polystyrène sulfonate ou les copolymères du polystyrène sulfonate,
- les dérivés cationiques de polystyrène, tels que le polystyrène trialkylbenzyl ammonium
- la poly(4-vinylpyridine) ou ses dérivés,
- l'alcool polyvinylique ou ses dérivés hydrophiles,
- la polyvinylpyrrolidone, ses dérivés, ou ses copolymères, ou
- un mélange de ceux-ci,

ledit polymère initial hydrophile et hydrosoluble ayant une masse moléculaire moyenne en masse de $1x10^4$ à $1,5x10^6$, notamment de $1x10^4$ à $5x10^5$, la teneur en polymère initial hydrophile et hydrosoluble dans la solution de synthèse étant de 5 à 50 %, de préférence de 10 à 30 %, en poids de la solution de synthèse,

(ii)

- un agent réticulant de 0,05 à 40 %, notamment de 1 à 40%, particulièrement de 5 à 20%, notamment de 15% en poids de polymère initial hydrophile et hydrosoluble, et éventuellement
- une molécule complexante de 1- 40%, notamment de 1 à 30% en poids de polymère initial hydrophile et hydrosoluble, ladite molécule complexante étant choisie parmi : un calixarène, un éther couronne, ledit agent réticulant étant choisi dans le groupe comprenant :
- un diazoture, notamment le diazidostilbène,
- une diamine, notamment l'hexaméthylènediamine,
- un polymère hydrophile choisi dans le groupe comprenant un polyéthylène glycol, un polyhydroxyéthyl méthacrylate, le polyvinylpyrrolidone, ses dérivés ou ses copolymères,
- un dibromoalcane en ($C_1$-$C_{10}$), notamment le 1,4-dibromo butane
- un dibromo-p-xylène
- un diiodoalcane en ($C_1$-$C_{10}$) notamment le 1,4-diiodo butane
- un dichloroalcane en ($C_1$-$C_{10}$) notamment le 1,4-dichloro butane, et
- un calixarène de formule I

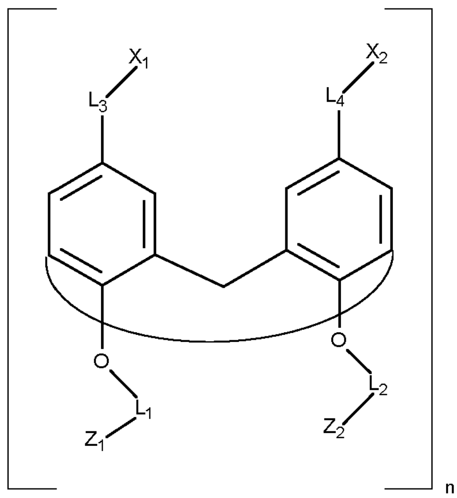

(I),

dans laquelle :

- $X_1$ et $X_2$ représentent chacun indépendamment l'un de l'autre H ou un groupe

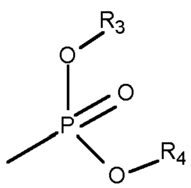

,

dans lequel $R_3$ et $R_4$ représentent chacun, indépendamment l'un de l'autre, H ou un groupe alkyle en ($C_1$-$C_8$), à condition que $X_1$ et $X_2$ ne représentent pas simultanément H,
- $L_1$, $L_2$, $L_3$ et $L_4$ sont des groupements espaceurs, choisis indépendamment les uns des autres, dans le groupe consistant en un cycloalkylényle en ($C_3$-$C_{10}$), O, NH, $-(CH_2)_q-$, q étant un nombre entier de 1 à 12,
- $Z_1$ et $Z_2$ représentent chacun, indépendamment l'un de l'autre, un groupement fonctionnel choisi parmi une amine éventuellement protégée, F, Cl, Br, I, OH, C(=O)H, C(=O)Hal, un groupe aryle ou un groupe aryle substitué, tel qu'un tosyle, un groupement diazonium, un hétérocycle aromatique tel qu'un groupe pyrrolyle, furyle, thiényle, ou pyridinyle, un groupe sulfate ou sulfonate éventuellement protégé,
- n est un nombre entier de 1 à 10 ; ou un calixarène de formule II

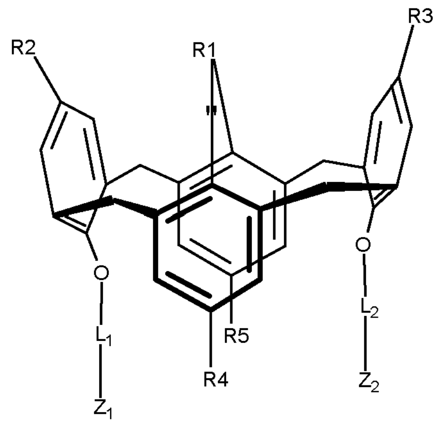

(II),

dans laquelle :

- R1 est choisi parmi $-X(C_2H_4X)_m-$, ou$-X(C_2H_4X)_{p/2}YX(C_2H_4)_{p/2}-$, X étant choisi indépendamment parmi O et/ou N, m étant égale à 3, 4, 5 ou 6, p étant égale à 2 ou 4, Y étant un cycloalkylène en ($C_3$-$C_{10}$) ou un arylène en ($C_6$-$C_{10}$) ; et
- $R_2$ à $R_5$ sont choisis indépendamment l'un de l'autre parmi H, ou un alkyle ($C_1$-$C_6$) ;
- $L_1$ et $L_2$ sont des groupements espaceurs, choisis indépendamment les uns des autres, parmi un cycloalkylène en ($C_3$-$C_{10}$) ou un arylène en ($C_3$-$C_{10}$), - $(CH_2)_q$-, q étant un nombre entier de 1 à 12 ;
- $Z_1$, $Z_2$ sont des groupements de greffage, choisis indépendamment les uns des autres, parmi F, Cl, Br, I, $-OHNH_2$, -C(=O)Hal, -C(=O)OH, un groupe aryle ou un groupe aryle substitué, tel qu'un tosyle, un groupement diazonium, un hétérocycle aromatique tel qu'un groupe pyrrolyle, furyle, thiényle, ou pyridinyle, un groupe sulfate ou sulfonate éventuellement protégé.

(b) la stabilisation par un traitement thermique ou par radiation de rayons ultra-violets de type VUV (Vacuum Ultra-Violet) ou UV ou par rayonnement visible des nanofibres obtenues dans l'étape (a) pour obtenir des nanofibres insolubles mais gonflables dans un effluent essentiellement aqueux, lesdites nanofibres ayant un taux de réticulation compris entre 5 et 40%, particulièrement de 5 à 20 %, notamment de 15%.

**2.** Nanofibres insolubles et gonflables selon larevendication 1 , **caractérisées en ce qu'**elles sont obtenues par le procédé comprenant les étapes suivantes :

(a) l'obtention des nanofibres par électrospinning ou centrifugal spinning à partir d'une solution de synthèse, ladite solution comprenant un agent réticulant et un polymère initial hydrophile et hydrosoluble tel que défini dans la revendication 1 ayant une masse moléculaire moyenne en masse de $1x10^4$ à $1,5x10^6$, notamment de $1x10^4$ à $5x10^5$,
(b) la stabilisation des nanofibres obtenues dans l'étape (a) par un traitement thermique pour obtenir des nanofibres insolubles et gonflables dans un effluent essentiellement aqueux.

**3.** Nanofibres insolubles et gonflables selon la revendication 1 , **caractérisées en ce qu'**elles sont obtenues par le procédé comprenant les étapes suivantes :

(a) l'obtention des nanofibres par électrospinning ou centrifugal spinning à partir d'une solution de synthèse d'un polymère initial hydrophile et hydrosoluble tel que défini dans la revendication 1,
(b) la stabilisation des nanofibres obtenues dans l'étape (a) par radiation de VUV ou UV ou par rayonnement visible pour obtenir des nanofibres insolubles et gonflables dans un effluent essentiellement aqueux.

**4.** Nanofibres insolubles et gonflables selon la revendication 3, **caractérisées en ce que** la susdite solution de synthèse comprend en outre un calixarène de formule I ou de formule II tel que défini dans la revendication 1.

**5.** Nanofibres insolubles et gonflables selon l'une quelconque des revendications 1 ou 2, **caractérisées en ce que** la susdite solution de synthèse est une solution eau/éthanol.

**6.** Membrane constituée par des nanofibres insolubles mais gonflables dans un solvant essentiellement aqueux selon l'une quelconque des revendications 1 à 5.

**7.** Utilisation des nanofibres insolubles et gonflables dans un effluent essentiellement aqueux selon l'une quelconque des revendications 1 à 5, ou une membrane selon la revendication 6, pour traiter un effluent contenant des métaux, notamment les sels métalliques issus des métaux lourds, des terres rares, des métaux alcalins, des alcalino-terreux, ou des actinides, dans leurs formes isotopiques stables ou instables.

**8.** Utilisation selon la revendication 7, pour traiter un effluent contenant du césium, **caractérisée en ce que** les nanofibres sont obtenues à partir d'une solution de synthèse organique comprenant :

- l'acide polyacrylique ou ses dérivés anioniques, et
- un calixarène de formule I ou formule II ou un calixarène non réticulant.

**9.** Utilisation selon la revendication 7, pour traiter un effluent contenant du cuivre, **caractérisée en ce que** lesdites nanofibres sont obtenues à partir d'une solution aqueuse de l'acide polyacrylique ou de co-polymères.

**10.** Utilisation selon la revendication 7, pour traiter un effluent contenant de l'uranium, **caractérisée en ce que** lesdites nanofibres sont obtenues à partir d'une solution de synthèse comprenant les dérivés cationiques de polystyrène.

**11.** Procédé d'extraction dans un effluent des métaux, notamment les sels métalliques issus des métaux lourds, des terres rares, des métaux alcalins, des alcalino-terreux, ou des actinides, dans leurs formes isotopiques stables ou instables, comprenant les étapes suivantes :

(i) placer des nanofibres insolubles mais gonflables selon l'une quelconque des revendications 1 à 5 ou une membrane selon la revendication 6 dans un effluent essentiellement aqueux pendant un temps suffisant ;
(ii) récupérer les métaux, notamment les sels métalliques issues des métaux lourds, des terres rares, des métaux alcalins, des alcalino-terreux, ou des actinides, dans leurs formes isotopiques stables ou instables complexés par lesdites nanofibres ou ladite membrane en plaçant desdites nanofibres ou ladite membrane dans une solution de régénération qui est une solution acide.

## Patentansprüche

**1.** In einem im Wesentlichen wässrigen Abwasser unlösliche und quellbare Nanofasern, deren Durchmesser 50 nm bis 10 μm, insbesondere 100 nm bis 5 μm, insbesondere 100 nm bis 1 μm, insbesondere 100 bis 300 nm beträgt, die durch das Verfahren erhalten werden können, das die folgenden Schritte umfasst:

(a) Erhalten der Nanofasern durch Elektrospinnen oder Zentrifugalspinnen aus einer Syntheselösung, wobei die Syntheselösung umfasst:

(i) mindestens ein hydrophiles und wasserlösliches Ausgangspolymer, ausgewählt aus der Gruppe bestehend aus:

- Polyacrylsäure oder Copolymeren von Polyacrylsäure,
- anionischen Derivaten von Polystyrol, wie Polystyrolsulfonat oder Copolymeren von Polystyrolsulfonat,
- kationischen Derivaten von Polystyrol, wie Polystyroltrialkylbenzylammonium,
- Poly(4-vinylpyridin) oder Derivaten davon,
- Polyvinylalkohol oder hydrophilen Derivaten davon,
- Polyvinylpyrrolidon, Derivaten davon oder Copolymeren davon, oder
- einer Mischung davon,

wobei das hydrophile und wasserlösliche Ausgangspolymer ein gewichtsmittleres Molekulargewicht von $1x10^4$ bis $1{,}5x10^6$, insbesondere von $1x10^4$ bis $5x10^5$ aufweist, der Gehalt an hydrophilem und in der Syntheselösung wasserlöslichem Ausgangspolymer 5 bis 50 %, vorzugsweise 10 bis 30 %, bezogen auf das Gewicht der Syntheselösung beträgt,

(ii)

- ein Vernetzungsmittel mit 0,05 bis 40 Gew.-%, insbesondere 1 bis 40 Gew.-%, insbesondere 5 bis 20 Gew.-%, insbesondere 15 Gew.-% des hydrophilen und wasserlöslichen Ausgangspolymers, und gegebenenfalls
- ein komplexbildendes Molekül mit 1 bis 40 Gew.-%, insbesondere von 1 bis 30 Gew.-% des hydrophilen und wasserlöslichen Ausgangspolymers, wobei das komplexbildende Molekül ausgewählt ist aus: einem Calixaren, einem Kronenether;

wobei das Vernetzungsmittel ausgewählt ist aus der Gruppe bestehend aus:

- einem Diazid, insbesondere Diazidostilben,
- einem Diamin, insbesondere Hexamethylendiamin,
- einem hydrophilen Polymer, ausgewählt aus der Gruppe bestehend aus Polyethylenglykol, Polyhydroxyethylmethacrylat, Polyvinylpyrrolidon, Derivaten oder Copolymeren davon,
- einem ($C_1$-$C_{10}$)-Dibromalkan, insbesondere 1,4-Dibrombutan,
- einem Dibromo-p-Xylol
- einem ($C_1$-$C_{10}$)-Diiodoalkan, insbesondere 1,4-Diiodobutan,
- einem ($C_1$-$C_{10}$)-Dichloralkan, insbesondere 1,4-Dichlorbutan, und
- einem Calixaren der Formel I

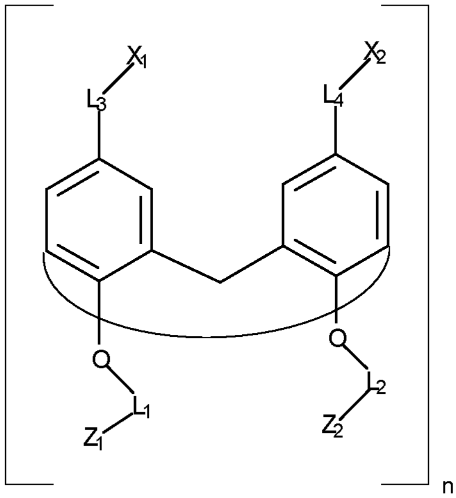

(I),

worin:

- $X_1$ und $X_2$ jeweils unabhängig voneinander für H oder eine Gruppe

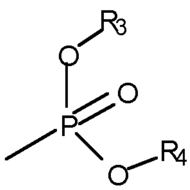

stehen, worin $R_3$ und $R_4$ jeweils unabhängig voneinander für H oder ($C_1$-$C_8$)-Alkyl stehen, mit der Maßgabe, dass $X_1$ und $X_2$ nicht gleichzeitig für H stehen,
- $L_1$, $L_2$, $L_3$ und $L_4$ Spacergruppen sind, jeweils unabhängig voneinander ausgewählt aus der Gruppe bestehend aus ($C_3$-$C_{10}$)-Cycloalkylenyl, O, NH, -$(CH_2)_q$-, wobei q eine ganze Zahl von 1 bis 12 ist,

- $Z_1$ et $Z_2$ jeweils unabhängig voneinander für eine funktionelle Gruppe stehen, ausgewählt aus einem gegebenenfalls geschützten Amin, F, Cl, Br, I, OH, C(=O)H, C(=0)Hal, einer Arylgruppe oder einer substituierten Arylgruppe, wie Tosyl, einer Diazoniumgruppe, einem aromatischen Heterocyclus wie Pyrrolyl, Furyl, Thienyl oder Pyridinyl, einer gegebenenfalls geschützten Sulfat-

oder Sulfonatgruppe,
- n eine ganze Zahl von 1 bis 10 ist; oder
ein Calixaren der Formel II

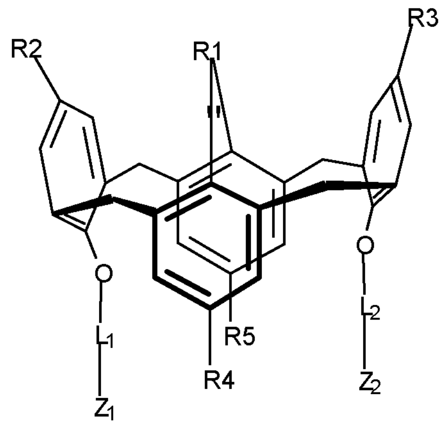

(II),

worin:

- R1 ausgewählt ist aus $-X(C_2H_4X)_m-$ oder $-X(C_2H_4X)_{p/2}YX(C_2H_4)_{p/2}-$, wobei X unabhängig ausgewählt ist aus O und/oder N, m gleich 3, 4, 5 oder 6 ist, p gleich 2 oder 4 ist, Y ($C_3$-$C_{10}$)-Cycloalkylen oder ($C_6$-$C_{10}$)-Arylen ist; und
- $R_2$ bis $R_5$ unabhängig voneinander ausgewählt sind aus H oder einem ($C_1$-$C_6$)-Alkyl;
- $L_1$ und $L_2$ Spacergruppen sind, unabhängig voneinander ausgewählt aus ($C_3$-$C_{10}$)-Cycloalkylen oder ($C_3$-$C_{10}$)-Arylen, $-(CH_2)_q-$, wobei q eine ganze Zahl von 1 bis 12 ist;
- $Z_1$, $Z_2$ Pfropfgruppen sind, die unabhängig voneinander ausgewählt sind aus F, Cl, Br, I, $OHNH_2$, -C(=O)Hal, - C(=O)OH, einer Arylgruppe oder einer substituierten Arylgruppe wie Tosyl, einer Diazoniumgruppe, einem aromatischen Heterocyclus wie Pyrrolyl, Furyl, Thienyl oder Pyridinyl, einer gegebenenfalls geschützten Sulfat- oder Sulfonatgruppe,

(b) Stabilisieren der in Schritt (a) erhaltenen Nanofasern durch Wärmebehandlung oder durch Bestrahlung mit ultravioletten Strahlen vom Typ VUV (Vakuum-Ultraviolett) oder UV oder durch sichtbare Strahlung, um Nanofasern zu erhalten, die in einem im Wesentlichen wässrigen Abwasser unlöslich, aber quellbar sind,
wobei die Nanofasern einen Vernetzungsgrad zwischen 5 und 40 %, bevorzugt 5 bis 20 %, insbesondere 15 % aufweisen.

**2.** Unlösliche und quellbare Nanofasern nach Anspruch 1, **dadurch gekennzeichnet, dass** sie durch das Verfahren erhalten werden, das die folgenden Schritte umfasst:

(a) Erhalten der Nanofasern durch Elektrospinnen oder Zentrifugalspinnen aus einer Syntheselösung, wobei die Lösung ein Vernetzungsmittel und ein hydrophiles und wasserlösliches Ausgangspolymer gemäß Anspruch 1 mit einem gewichtsmittleren Molekulargewicht von $1x10^4$ bis $1,5x10^6$, insbesondere von $1x10^4$ à $5x10^5$ umfasst,
(b) Stabilisieren der in Schritt (a) erhaltenen Nanofasern durch Wärmebehandlung, um Nanofasern zu erhalten, die in einem im Wesentlichen wässrigen Abwasser unlöslich und quellbar sind.

**3.** Unlösliche und quellbare Nanofasern nach Anspruch 1, **dadurch gekennzeichnet, dass** sie durch das Verfahren erhalten werden, das die folgenden Schritte umfasst:

(a) Erhalten der Nanofasern durch Elektrospinnen oder Zentrifugalspinnen aus einer Syntheselösung aus einem hydrophilen und wasserlöslichen Ausgangspolymer nach Anspruch 1,
(b) Stabilisieren der in Schritt (a) erhaltenen Nanofasern durch UV- oder VUV-Strahlung oder durch sichtbare Strahlung, um Nanofasern zu erhalten, die in einem im Wesentlichen wässrigen Abwasser unlöslich und quellbar sind.

4. Unlösliche und quellbare Nanofasern nach Anspruch 3, **dadurch gekennzeichnet, dass** oben genannte Syntheselösung ferner ein Calixaren der Formel I oder der Formel II gemäß Anspruch 1 umfasst.

5. Unlösliche und quellbare Nanofasern nach einem der Ansprüche 1 oder 2, **dadurch gekennzeichnet, dass** die oben genannte Syntheselösung eine Wasser/Ethanol-Lösung ist.

6. Membran aus Nanofasern, die in einem im Wesentlichen wässrigen Lösungsmittel unlöslich, aber quellbar sind, nach einem der Ansprüche 1 bis 5.

7. Verwendung von Nanofasern, die in einem im Wesentlichen wässrigen Abwasser unlöslich und quellbar sind, nach einem der Ansprüche 1 bis 5 oder einer Membran nach Anspruch 6 zur Behandlung eines Abwassers, das Metalle, insbesondere Metallsalze von Schwermetallen, Seltenerdmetallen, Alkalimetallen, Erdalkalimetallen oder Actiniden, in ihren stabilen oder instabilen Isotopenformen enthält.

8. Verwendung nach Anspruch 7 zur Behandlung eines cäsiumhaltigen Abwassers, **dadurch gekennzeichnet, dass** die Nanofasern aus einer organischen Syntheselösung erhalten werden, umfassend:

- Polyacrylsäure oder anionische Derivate davon, und
- ein Calixaren der Formel I oder Formel II oder ein nicht vernetzendes Calixaren.

9. Verwendung nach Anspruch 7 zur Behandlung eines kupferhaltigen Abwassers, **dadurch gekennzeichnet, dass** die Nanofasern aus einer wässrigen Lösung von Polyacrylsäure oder Copolymeren erhalten werden.

10. Verwendung nach Anspruch 7 zur Behandlung eines uranhaltigen Abwassers, **dadurch gekennzeichnet, dass** die Nanofasern aus einer Syntheselösung erhalten werden, die kationische Derivate von Polystyrol umfasst.

11. Verfahren zur Extraktion von Metallen, insbesondere Metallsalzen von Schwermetallen, Seltenerdmetallen, Alkalimetallen, Erdalkalimetallen oder Actiniden in ihren stabilen oder instabilen Isotopenformen aus einem Abwasser, umfassend die folgenden Schritte:

(i) Einbringen von unlöslichen, aber quellbaren Nanofasern nach einem der Ansprüche 1 bis 5 oder einer Membran nach Anspruch 6 in einen im Wesentlichen wässrigen Abwasser für eine ausreichende Zeit;
(ii) Rückgewinnen von Metallen, einschließlich Metallsalzen von Schwermetallen, Seltenerdmetallen, Alkalimetallen, Erdalkalimetallen oder Actiniden, in ihren stabilen oder instabilen Isotopenformen, die durch die Nanofasern oder die Membran komplexiert sind, indem die Nanofasern oder die Membran in eine Regenerationslösung eingebracht werden, die eine saure Lösung ist.

## Claims

1. Nanofibres that are insoluble and swellable in an essentially aqueous effluent, the diameter of said nanofibers being from 50 nm to 10 μm, in particular from 100 nm to 5 μm, more particularly from 100 nm to 1 μm, even more particularly from 100 to 300 nm, capable of being obtained by the process comprising the following steps:

(a) obtaining the nanofibres by electrospinning or centrifugal spinning from a synthesis solution, said synthesis solution comprising:

(i) at least one hydrophilic and water-soluble initial polymer selected from the group comprising:

- polyacrylic acid or the copolymers of polyacrylic acid,
- the anionic derivatives of polystyrene, such as polystyrene sulphonate or the copolymers of polystyrene sulphonate,
- the cationic derivatives of polystyrene, such as polystyrene trialkylbenzyl ammonium
- poly(4-vinylpyridine) or derivatives thereof,
- polyvinyl alcohol or hydrophilic derivatives thereof,
- polyvinylpyrrolidone, derivatives thereof, or copolymers thereof, or
- a mixture thereof:

said hydrophilic and water-soluble initial polymer having a molecular weight from $1x10^4$ to $1.5x10^6$, in

particular from $1x10^4$ to $5x10^5$, the hydrophilic and water-soluble initial polymer content in the synthesis solution being from 5 to 50 wt.%, preferably from 10 to 30 wt.%, relative to the synthesis solution,

(ii)

- a cross-linking agent from 0.05 to 40 wt.%, in particular from 1 to 40 wt.%, particularly from 5 to 20 wt.%, in particular 15 wt.% relative to the hydrophilic and water-soluble initial polymer, and optionally
- a complexing molecule from 1- 40 wt.%, in particular from 1 to 30 wt.% relative to the hydrophilic and water-soluble initial polymer, said complexing molecule being selected from: a calixarene, a crown ether, said cross-linking agent being selected from the group comprising:
- a diazide, in particular diazidostilbene,
- a diamine, in particular hexamethylenediamine,
- a hydrophilic polymer selected from the group comprising a polyethylene glycol, a polyhydroxyethyl methacrylate, polyvinylpyrrolidone, derivatives thereof or copolymers thereof,
- a ($C_1$-$C_{10}$) dibromoalkane, in particular 1,4-dibromobutane,
- a dibromo-p-xylene,
- a ($C_1$-$C_{10}$) diiodoalkane in particular 1,4-diiodobutane,
- a ($C_1$-$C_{10}$) dichloroalkane in particular 1,4-dichlorobutane, and
- a calixarene of Formula I

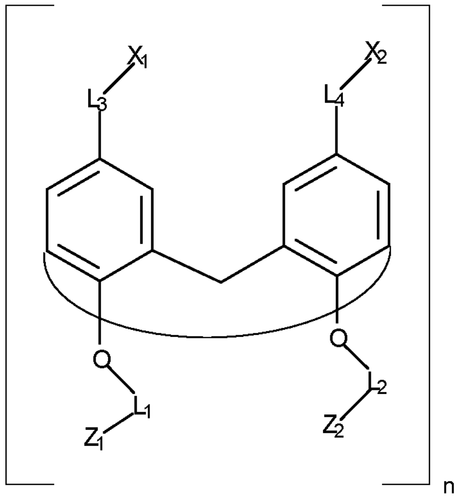

(I),

in which:

- $X_1$ and $X_2$ each represent independently of each other H or a

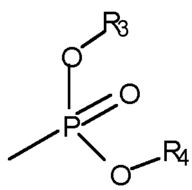

group, in which $R_3$ and $R_4$ each represent, independently of each other, H or a ($C_1$-$C_8$) alkyl group, provided that $X_1$ and $X_2$ do not simultaneously represent H;
- $L_1$, $L_2$, $L_3$ and $L_4$ are spacer groups, selected independently of each other from the group consisting of a ($C_3$-$C_{10}$) cycloalkylenyl, O, NH, $-(CH_2)_q-$, q being an integer from 1 to 12;

- $Z_1$ and $Z_2$ each represent, independently of each other, a functional group selected from an optionally protected amine, F, Cl, Br, I, OH, C(=O)H, C(=O)Hal, an aryl group or a substituted aryl group, such as a tosyl, a diazonium group, an aromatic heterocycle such as a pyrrolyl, furyl, thienyl, or pyridinyl group, an optionally protected sulphate or sulphonate group,

- n is an integer from 1 to 10; or a calixarene of Formula II

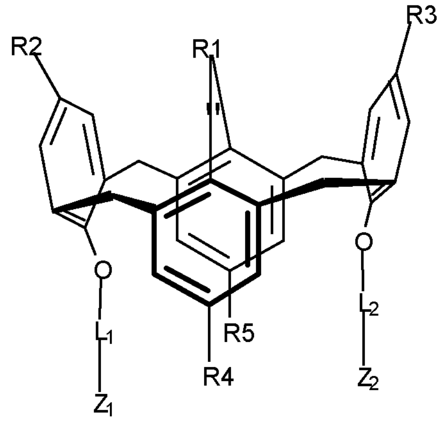

(II),

in which:

- R1 is selected from $-X(C_2H_4X)_m-$, or $-X(C_2H_4X)_{p/2}YX(C_2H_4)_{p/2}-$, X being selected independently from O and/or N, m being equal to 3, 4, 5 or 6, p being equal to 2 or 4, Y being a $(C_3-C_{10})$ cycloalkylene or a $(C_6-C_{10})$ arylene; and
- $R_2$ to $R_5$ are selected independently of each other from H, or a $(C_1-C_6)$ alkyl;
- $L_1$ and $L_2$ are spacer groups, selected independently of each other from a $(C_3-C_{10})$ cycloalkylene or a $(C3-C_{10})$ arylene, $-(CH_2)_q-$, q being an integer from 1 to 12;
- $Z_1$, $Z_2$ are grafting groups, selected independently of each other from F, Cl, Br, I, $-OHNH_2$, - C(=O)Hal, -C(=O)OH, an aryl group or a substituted aryl group, such as a tosyl, a diazonium group, an aromatic heterocycle such as a pyrrolyl, furyl, thienyl, or pyridinyl group, an optionally protected sulphate or sulphonate group.

(b) stabilizing the nanofibres obtained in step (a) by a heat treatment or by radiation with ultra-violet rays of the VUV (Vacuum Ultra-Violet) or UV type or by visible radiation in order to obtain nanofibres that are insoluble but swellable in an essentially aqueous effluent,

said nanofibres having a cross-linking rate comprised between 5 and 40%, particularly from 5 to 20%, in particular 15%.

**2.** The insoluble and swellable nanofibres according to claim 1, **characterized in that** they are obtained by the process comprising the following steps:

(a) obtaining the nanofibres by electrospinning or centrifugal spinning from a synthesis solution, said solution comprising a cross-linking agent and a hydrophilic and water-soluble initial polymer as defined in claim 1 having a molecular weight from $1x10^4$ to $1.5x10^6$, in particular from $1x10^4$ to $5x10^5$; and
(b) stabilizing the nanofibres obtained in step (a) by a heat treatment in order to obtain nanofibres that are insoluble and swellable in an essentially aqueous effluent.

**3.** The insoluble and swellable nanofibres according to claim 1, **characterized in that** they are obtained by the process comprising the following steps:

(a) obtaining the nanofibres by electrospinning or centrifugal spinning from a synthesis solution of a hydrophilic and water-soluble initial polymer as defined in claim 1; and
(b) stabilizing the nanofibres obtained in step (a) by VUV or UV radiation or by visible radiation in order to obtain nanofibres that are insoluble and swellable in an essentially aqueous effluent.

**4.** The insoluble and swellable nanofibres according to claim 3, **characterized in that** the abovementioned synthesis solution also comprises a calixarene of Formula I or of Formula II as defined in claim 1.

5. The insoluble and swellable nanofibres according to any of claim 1 or 2, **characterized in that** the abovementioned synthesis solution is a water/ethanol solution.

6. A membrane constituted by nanofibres that are insoluble but swellable in an essentially aqueous solvent according to claims 1 to 5.

7. Use of the nanofibres that are insoluble and swellable in an essentially aqueous effluent according to claims 1 to 5, or a membrane according to claim 6, for treating an effluent containing metals, in particular metal salts originating from heavy metals, rare earths, alkali metals, alkaline earth metals, or actinides, in the stable or unstable isotopic forms thereof.

8. The use according to claim 7, for treating an effluent containing caesium, **characterized in that** the nanofibres are obtained from an organic synthesis solution comprising:

    - polyacrylic acid or anionic derivatives thereof; and
    - a calixarene of Formula I or Formula II or a non-crosslinking calixarene.

9. The use according to claim 7, for treating an effluent containing copper, **characterized in that** said nanofibres are obtained from an aqueous solution of polyacrylic acid or of co-polymers.

10. The use according to claim 7, for treating an effluent containing uranium, **characterized in that** said nanofibres are obtained from a synthesis solution comprising the cationic derivatives of polystyrene.

11. A process of extraction from an effluent of metals, in particular metal salts originating from heavy metals, rare earths, alkali metals, alkaline earth metals, or actinides, in the stable or unstable isotopic forms thereof, comprising the following steps:

    (i) placing insoluble but swellable nanofibres according to claim 1 or a membrane according to claim 9 in an essentially aqueous effluent for a sufficient time; and
    (ii) recovering the metals, in particular the metal salts originating from the heavy metals, rare earths, alkali metals, alkaline earth metals, or actinides, in the stable or unstable isotopic forms thereof complexed by said nanofibres or said membrane by placing said nanofibres or said membrane in a regeneration solution which is an acid solution.

**Figure 1a**

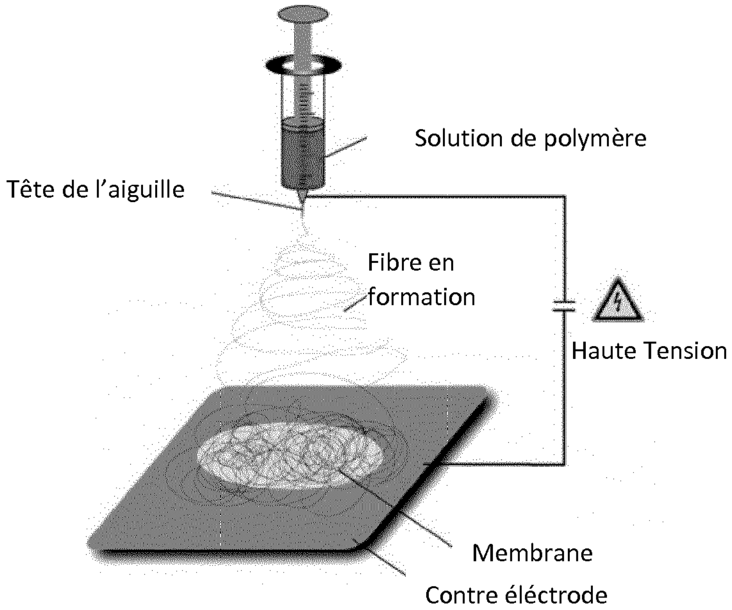


**Figure 1b**

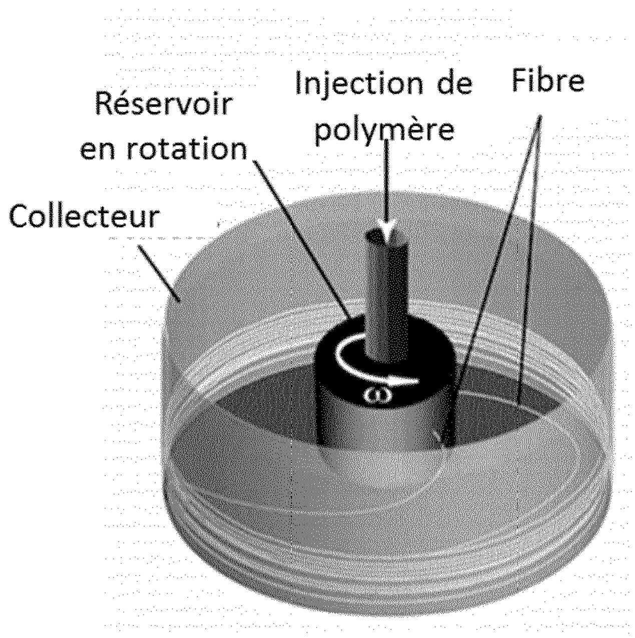

Figure 2

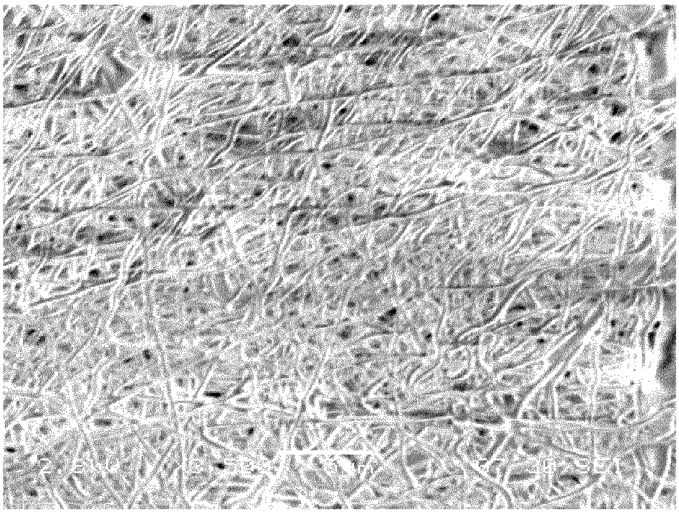

Figure 3a

Figure 3c

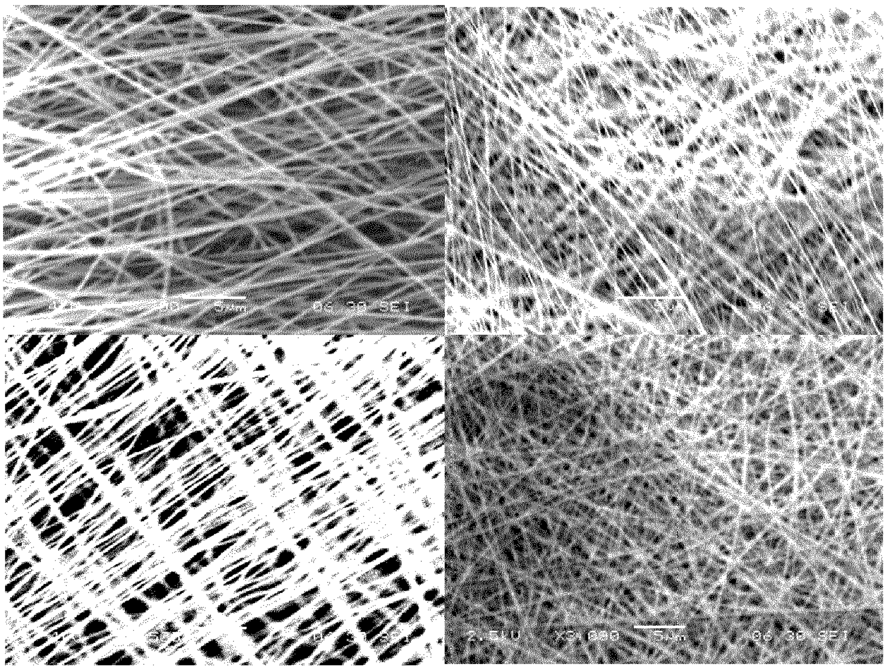

Figure 3b

Figure 3d

**Figure 4**

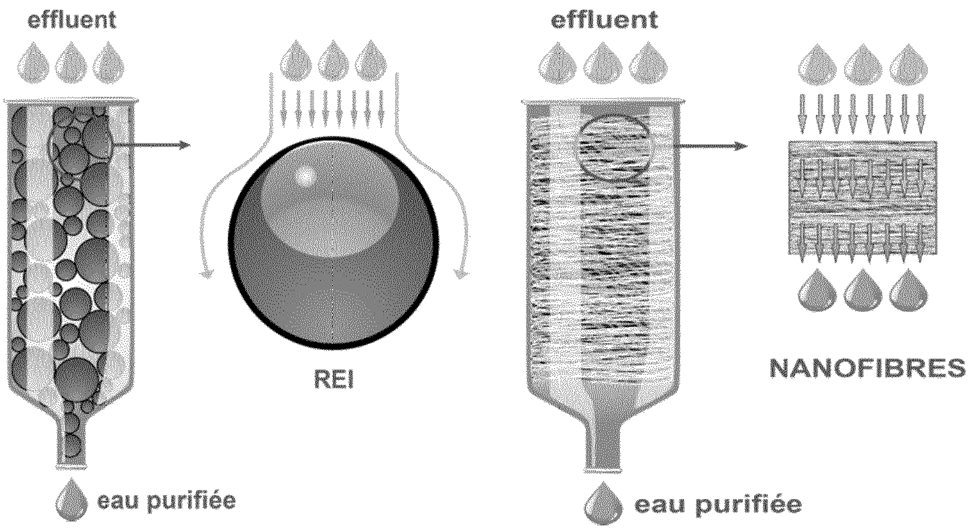
effluent
REI
effluent
NANOFIBRES
eau purifiée
eau purifiée

**Figure 5a**

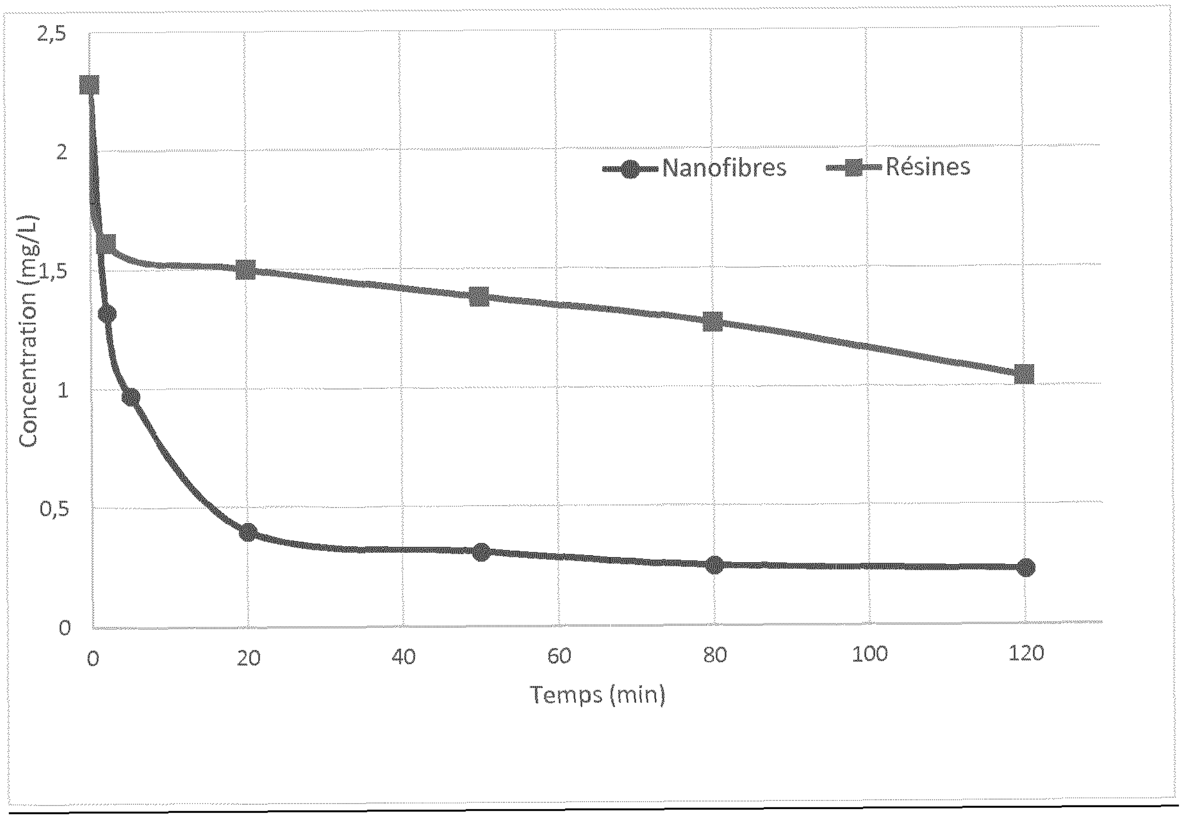


**Figure 5b**

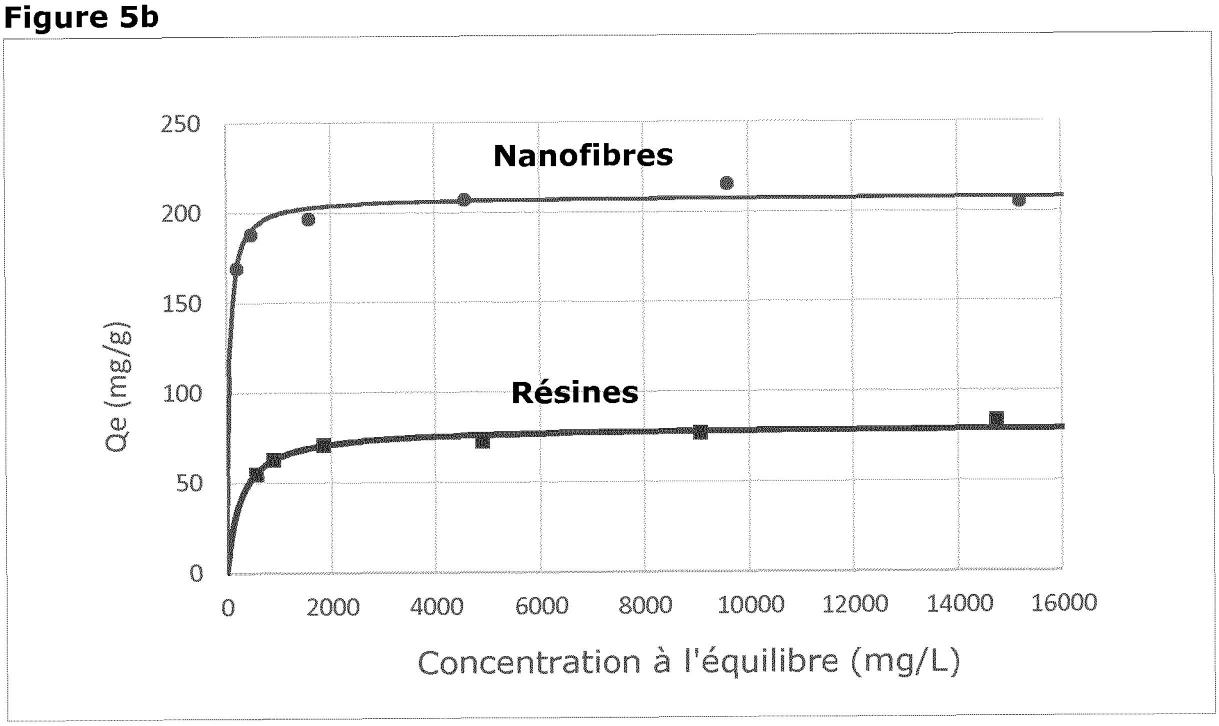

**Figure 5c**

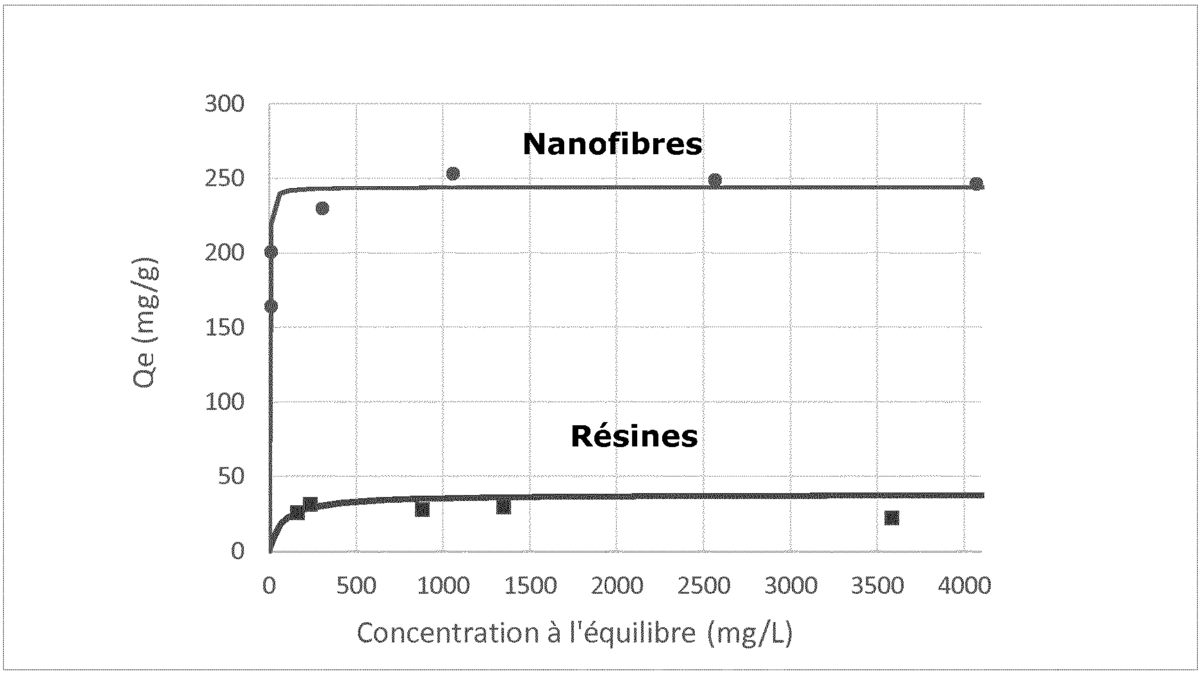


**Figure 5d**

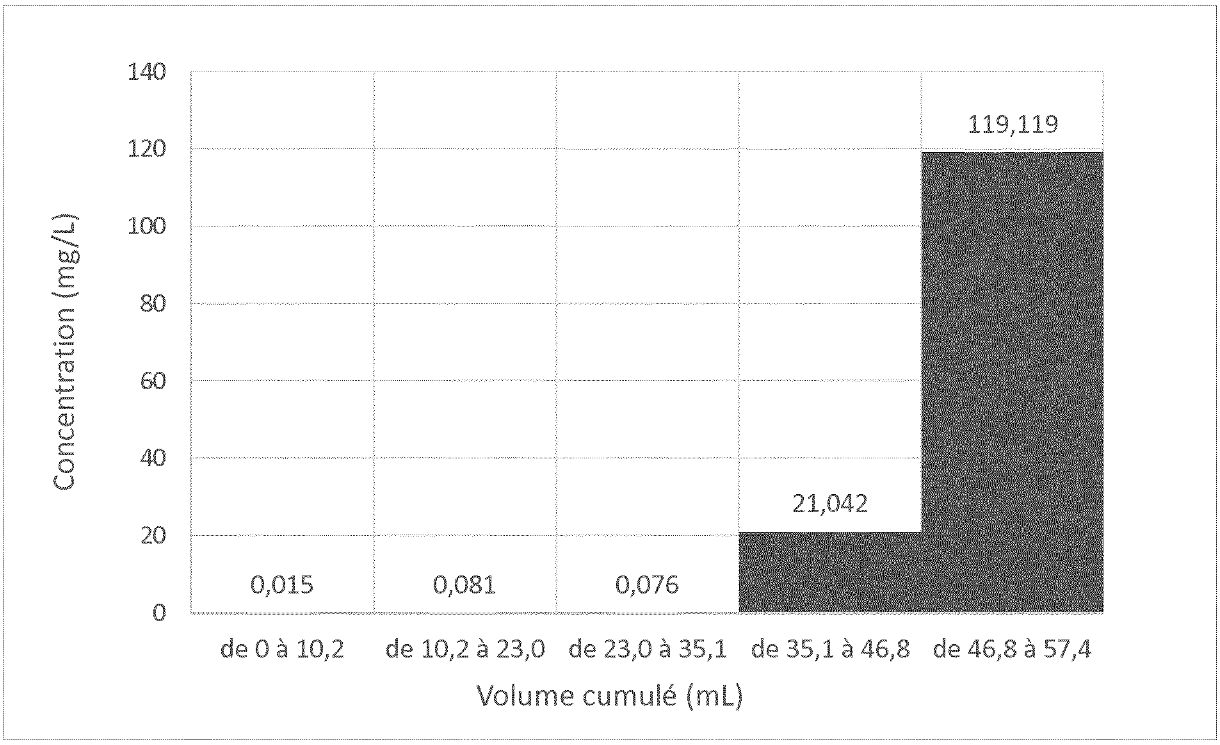

**Figure 5e**

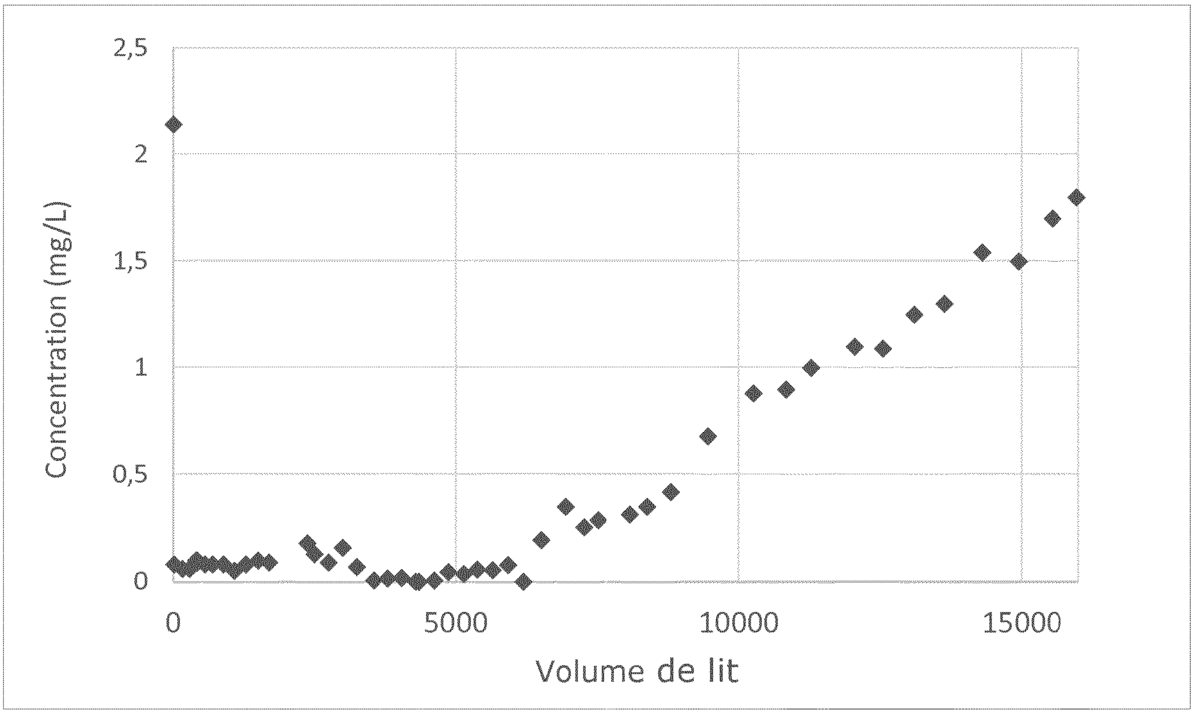


**Figure 5f**

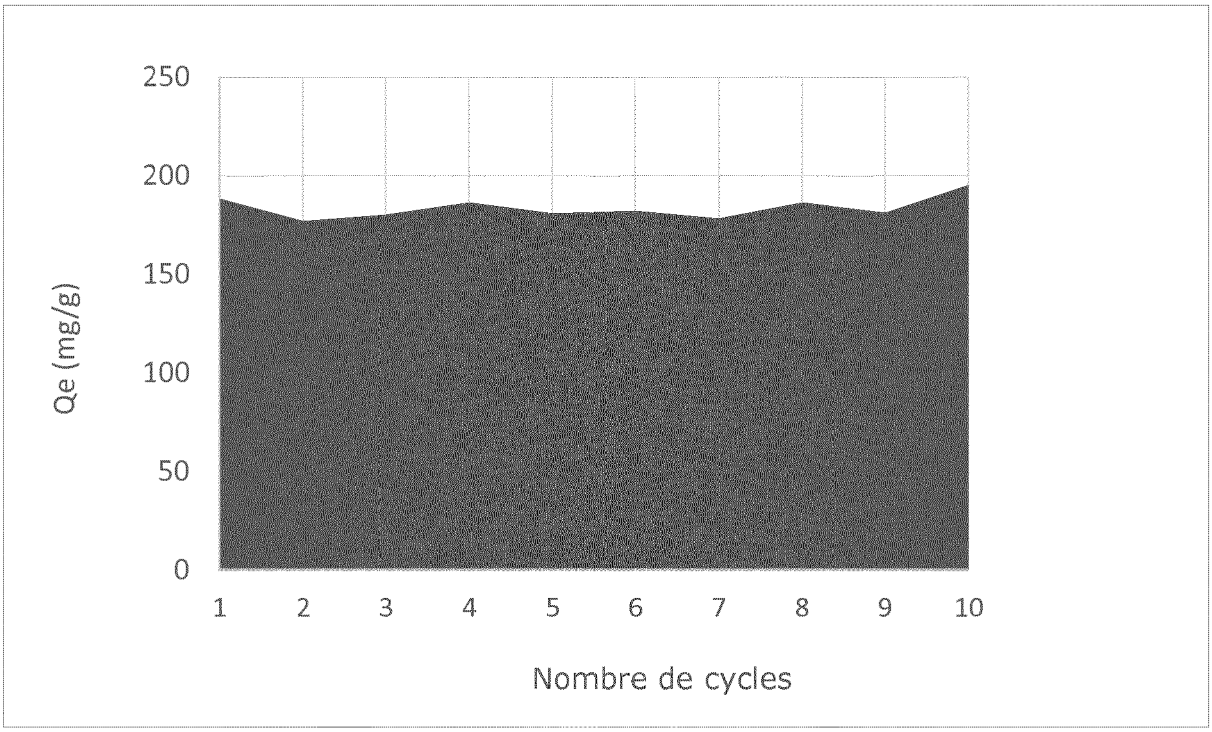

**Figure 6a**

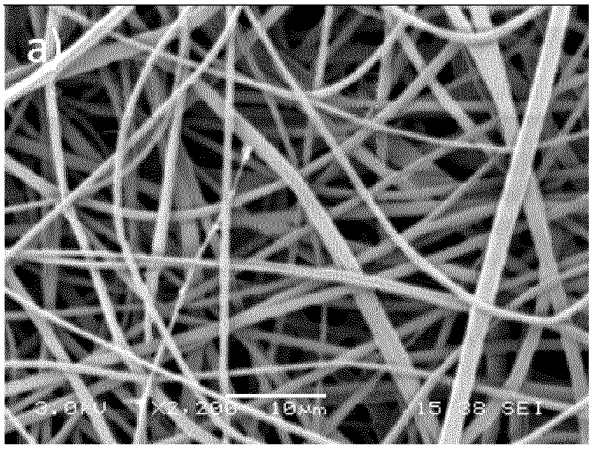


**Figure 6b**

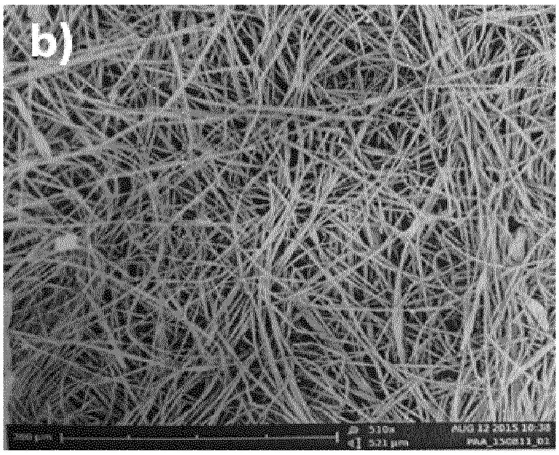


**Figure 7a**

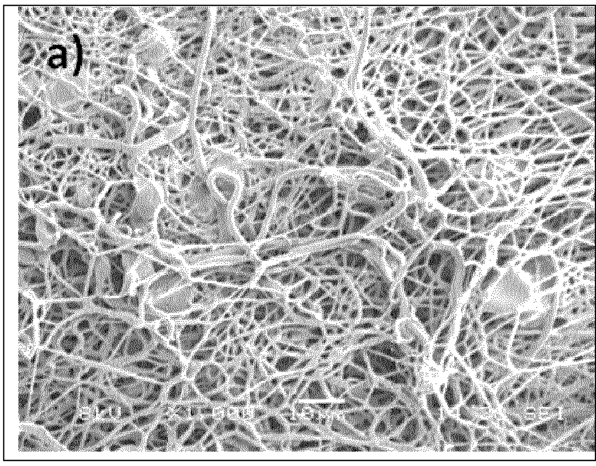


**Figure 7b**

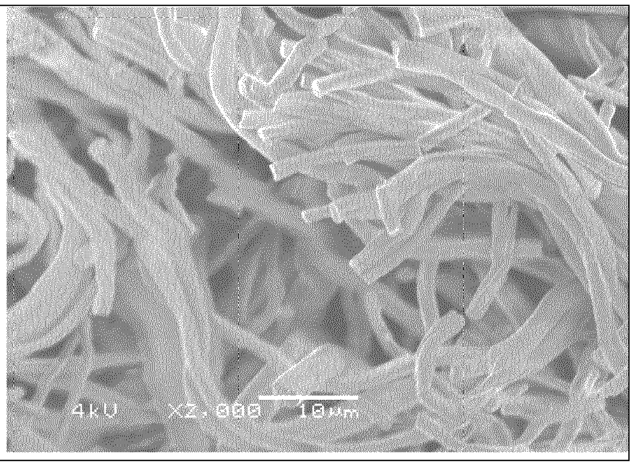

Figure 8a

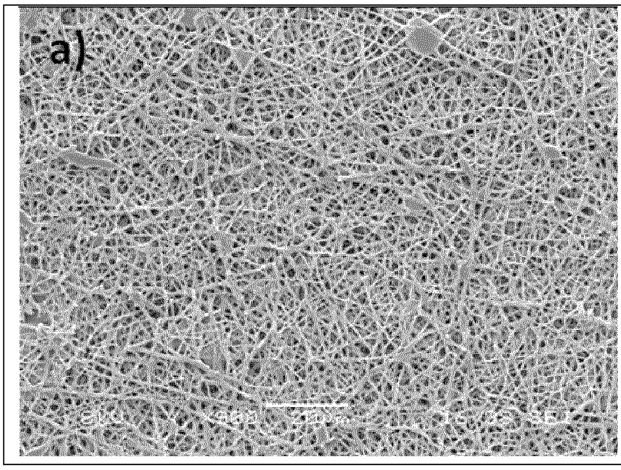


Figure 8b

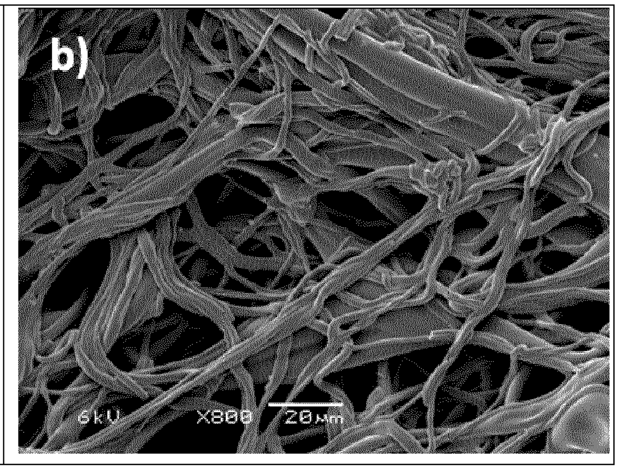

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2012027242 A1
- FR 1452958
- WO 2013124831 A


### Littérature non-brevet citée dans la description


- **KI et al.** *Membrane Sci.,* 2007, vol. 302, 20
- **IGNATOVA et al.** *Macromol. Rapid Commun.,* 2008, vol. 29, 1871-1876
- **F. HUANG.** *Materials,* 2013, vol. 6, 969-980
- **WANG et al.** *J. Membr. Sci.,* 2011, vol. 379, 191-199
- **XIAO et al.** *J. Appl. Polym. Sci.,* 2010, vol. 116, 2409
- **LI ; HSIEH.** *Polymer,* 2005, vol. 46, 5133
- **SARKAR et al.** *Materials Today,* 2010, vol. 13 (11), 12-14
- **LI ; XIA.** *Advanced Materials,* 2004, vol. 16 (14), 1151
- **ZHANG ; LU.** *Polymer Reviews,* 2014, vol. 54, 677-701
- **GREINER ; WENDORFF.** *Angew. Chem. Int. Ed.,* 2007, vol. 46, 5670-5703
- **C. J. LUO et al.** *Chem. Soc. Rev.,* 2012, vol. 41, 4708-4735